# EUROPÄISCHE PATENTANMELDUNG

(11) **EP 4 821 625 A1**
(43) Veröffentlichungstag der Anmeldung: **14.10.2026**
(21) Anmeldenummer: 26168172.0
(22) Anmeldetag: 26.03.2026
(51) Int. Cl.: B23F 21/10, B23F 5/16, C23C 28/04

(54) **BESCHICHTETES WERKZEUG ZUM BEARBEITEN WENIGSTENS EINER WERKSTÜCK-VERZAHNUNG EINES WERKSTÜCKS UND VERFAHREN ZUM HERSTELLEN EINES BESCHICHTETEN WERKZEUGS**

(30) Priorität: 10.04.2025 DE 102025114256
(71) Anmelder: Präwema Antriebstechnik GmbH, 37269 Eschwege/Werra (DE)
(72) Erfinder: GERLACH, Christian, 36205 Sontra-Ulfen (DE); HEINZERLING, Martin, 36205 Sontra-Ulfen (DE); FALKINGHAM, Mark. L., 2540 Grenchen (CH); LÜMKEMANN, Andreas, 3373 Heimenhausen (CH)
(74) Vertreter: Cohausz & Florack

(57) **Zusammenfassung**

Beschichtetes Werkzeug (1) zum Bearbeiten wenigstens einer Werkstück-Verzahnung eines Werkstücks, umfassend: einen Grundkörper (2), ein oder mehrere Werkstückkontaktabschnitte, und ein oder mehrere Funktionsabschnitte, wobei die ein oder mehreren Werkstückkontaktabschnitte dazu vorgesehen sind während des Bearbeitens der Werkstück-Verzahnung mittels des Werkzeugs (1) mit dem Werkstück, vorzugsweise der Werkstück-Verzahnung, in Kontakt, vorzugsweise spanabhebenden Eingriff, zu kommen, wobei die ein oder mehreren Funktionsabschnitte dazu vorgesehen sind während des Bearbeitens der Werkstück-Verzahnung mittels des Werkzeugs (1) von dem Werkstück, vorzugsweise der Werkstück-Verzahnung, beabstandet zu sein, und wobei die ein oder mehreren Werkstückkontaktabschnitte wenigstens abschnittsweise eine Verschleißschutzbeschichtung (17) aufweisen. Um den Einfluss des chemischen Entschichtens der Verschleißschutzbeschichtung (17) auf die Lebensdauer des Werkzeugs (1) zu verringern, wird vorgeschlagen, dass die ein oder mehreren Funktionsabschnitte wenigstens abschnittsweise eine Sperrbeschichtung (18) zum Schutz des Werkzeugs (1) beim Entschichten aufweisen und dass, vorzugsweise, die Sperrbeschichtung (18) Titan umfasst.

## Beschreibung

Die vorliegende Erfindung betrifft ein beschichtetes Werkzeug zum Bearbeiten wenigstens einer Werkstück-Verzahnung eines Werkstücks, umfassend: einen Grundkörper, ein oder mehrere Werkstückkontaktabschnitte und ein oder mehrere Funktionsabschnitte, wobei die ein oder mehreren Werkstückkontaktabschnitte dazu vorgesehen sind während des Bearbeitens der Werkstück-Verzahnung mittels des Werkzeugs mit dem Werkstück, vorzugsweise der Werkstück-Verzahnung, in Kontakt, vorzugsweise spanabhebenden Eingriff, zu kommen, wobei die ein oder mehreren Funktionsabschnitte dazu vorgesehen sind während des Bearbeitens der Werkstück-Verzahnung mittels des Werkzeugs von dem Werkstück, vorzugsweise der Werkstück-Verzahnung, beabstandet zu sein und wobei die ein oder mehreren Werkstückkontaktabschnitte wenigstens abschnittsweise eine Verschleißschutzbeschichtung aufweisen.

Die vorliegende Erfindung betrifft ferner ein Verfahren zum Herstellen eines beschichteten Werkzeugs, vorzugsweise eines beschichten Werkzeugs nach einem der Ansprüche 1 bis 11, umfassend die folgenden Schritte: a) Bereitstellen eines Werkzeugrohlings für ein beschichtetes Werkzeug zum Bearbeiten wenigstens einer Werkstück-Verzahnung eines Werkstücks, wobei der Werkzeugrohling einen Grundkörper umfasst, b) Auftragen einer Sperrbeschichtung zum Schutz des Werkzeugs beim Entschichten wenigstens abschnittsweise in ein oder mehreren Funktionsabschnitten des Werkzeugrohlings, wobei die ein oder mehreren Funktionsabschnitte dazu vorgesehen sind während des Bearbeitens der Werkstück-Verzahnung mittels des Werkzeugs von dem Werkstück, vorzugsweise der Werkstück-Verzahnung, beabstandet zu sein, wobei, vorzugsweise, die Sperrbeschichtung Titan umfasst, und c) Auftragen einer Verschleißschutzbeschichtung wenigstens abschnittsweise in ein oder mehreren Werkstückkontaktabschnitten des Werkzeugrohlings, wobei die ein oder mehreren Werkstückkontaktabschnitte dazu vorgesehen sind während des Bearbeitens der Werkstück-Verzahnung mittels des Werkzeugs mit dem Werkstück, vorzugsweise der Werkstück-Verzahnung, in Kontakt, vorzugsweise spanabhebenden Eingriff, zu kommen.

Um bei der Bearbeitung einer Werkstück-Verzahnung eines Werkstücks mittels eines Werkzeugs die Standzeit des verwendeten Werkzeugs zu erhöhen, ist es bekannt die mit dem Werkstück in Kontakt kommenden Abschnitte mit einer Verschleißschutzbeschichtung zu versehen. Beispielsweise ist aus der WO 99/14391 A1 bekannt Werkzeuge, beispielsweise ein Werkzeug für die Bearbeitung einer Werkstück-Verzahnung, mit einer Verschleißschutzbeschichtung zu versehen.

Wenn die Verschleißschutzbeschichtung durch die Bearbeitung des Werkstücks, insbesondere der Werkstück-Verzahnung, stark abgetragen ist, kann der verbliebende Rest der Verschleißschutzbeschichtung mittels Entschichtens, insbesondere chemischen Entschichtens, abgetragen werden und hierauf folgend eine neue Verschleißschutzbeschichtung auf dem Werkstück, insbesondere dem Grundkörper des Werkstücks, aufgetragen werden. Das Werkzeug kann dann wieder für die Bearbeitung eines Werkstücks, insbesondere einer Werkstück-Verzahnung, eingesetzt werden.

Hierbei hat sich jedoch herausgestellt, dass es in den nicht mit der Verschleißschutzbeschichtung versehenen Bereichen des Werkzeugs aufgrund des chemischen Entschichtens zum Entfernen der Reste der Verschleißschutzbeschichtung zum sogenanntem "Cobalt Leaching", also der Abscheidung von Kobalt aus dem Grundkörper des Werkzeugs an dessen Oberfläche, kommen kann. Das Entschichtungsmittel greift dabei die nicht beschichteten Bereiche des Werkzeugs, insbesondere des Grundkörpers, an. Dies kann die Materialeigenschaften des Werkzeugs, insbesondere des Grundkörpers, negativ beeinflussen und hierdurch die Lebensdauer des Werkzeugs verringern.

Vor diesem Hintergrund liegt der vorliegenden Erfindung die Aufgabe zu Grunde ein beschichtetes Werkzeug zum Bearbeiten wenigstens einer Werkstück-Verzahnung und Verfahren zum Herstellen eines beschichteten Werkzeugs bereitzustellen, die den Einfluss des chemischen Entschichtens der Verschleißschutzbeschichtung auf die Lebensdauer des Werkzeugs verringern.

Die zuvor genannte Aufgabe wird erfindungsgemäß bei dem beschichteten Werkzeug dadurch gelöst, dass die ein oder mehreren Funktionsabschnitte wenigstens abschnittsweise eine Sperrbeschichtung zum Schutz des Werkzeugs beim Entschichten aufweisen und dass, vorzugsweise, die Sperrbeschichtung Titan umfasst.

Die zuvor genannte Aufgabe wird erfindungsgemäß bei dem Verfahren zum Herstellen eines beschichteten Werkzeugs durch das erfindungsgemäße Verfahren gelöst.

Im Folgenden werden verschiedene Ausführungsformen des beschichteten Werkzeugs und des Verfahrens zum Herstellen eines beschichteten Werkzeugs beschrieben, wobei die einzelnen Ausführungsformen jeweils unabhängig voneinander für das Werkzeug und das Verfahren gelten. Darüber hinaus können die einzelnen Ausführungsformen beliebig miteinander kombiniert werden.

Das beschichtete Werkzeug zum Bearbeiten wenigstens einer Werkstück-Verzahnung eines Werkstücks umfasst einen Grundkörper. Der Grundkörper kann dabei wenigstens abschnittsweise zylindrisch und/oder zahnradförmig ausgestaltet sein. Der Grundköper kann wenigstens abschnittsweise aus Metall, vorzugsweise Eisen und/oder Stahl, hergestellt sein. Alternativ oder zusätzlich kann der Grundkörper wenigstens abschnittsweise aus Vollhartmetall, Pulvermetall und/oder Schnellarbeitsstahl hergestellt sein. Die Werkzeugverzahnung, vorzugsweise ein oder mehrere Schneidekanten und/oder ein oder mehrere Schneideflächen, (auf die nachfolgend noch eingegangen wird) kann wenigstens abschnittsweise aus einem anderen Material hergestellt sein als der Rest des Werkzeugs, vorzugsweise des Grundkörpers. Das Bearbeiten einer Werkstück-Verzahnung umfasst das, vorzugsweise erstmalige, Herstellen einer Werkstück-Verzahnung, beispielsweise aus einem Werkstückrohling, und/oder die Weiterverarbeitung einer Werkstück-Verzahnung. Das Werkzeug, vorzugsweise der Grundkörper, kann eine Rotationsachse aufweisen, um die sich das Werkzeug beim Bearbeiten dreht. Das Werkzeug und/oder der Grundkörper kann vorzugsweise wenigstens abschnittsweise symmetrisch, vorzugsweise rotationssymmetrisch, in Bezug zu der Rotationsachse ausgestaltet sein. Bei dem Werkstück kann es sich um ein Zahnrad handeln. Bei dem Werkzeug kann es sich vorzugsweise um ein Wälzschälwerkzeug und/oder Wälzfräswerkzeug handeln.

Das Werkzeug umfasst zudem ein oder mehrere Werkstückkontaktabschnitte, wobei die ein oder mehreren Werkstückkontaktabschnitte dazu vorgesehen sind während des Bearbeitens der Werkstück-Verzahnung mittels des Werkzeugs mit dem Werkstück, vorzugsweise der Werkstück-Verzahnung, in Kontakt, vorzugsweise spanabhebenden Eingriff, zu kommen. Es handelt sich somit insbesondere um diejenigen Bereiche des Werkzeugs, die durch das Bearbeiten des Werkstücks und dem Kontakt mit dem Werkstück verschleißen.

Das Werkzeug umfasst zudem ein oder mehrere Funktionsabschnitte, wobei die ein oder mehreren Funktionsabschnitte dazu vorgesehen sind während des Bearbeitens der Werkstück-Verzahnung mittels des Werkzeugs von dem Werkstück, vorzugsweise der Werkstück-Verzahnung, beabstandet zu sein. Die ein oder mehreren Funktionsabschnitte sind somit vorzugsweise zum Nicht-Kontaktieren des Werkstücks, vorzugweise der Werkstück-Verzahnung, während des Bearbeitens der Verzahnung des Werkstücks mittels des Werkzeugs vorgesehen.

Zudem ist vorgesehen, dass die ein oder mehreren Werkstückkontaktabschnitte wenigstens abschnittsweise eine Verschleißschutzbeschichtung aufweisen. Die Verschleißschutzbeschichtung vermindert den Verschleiß des Werkzeugs und verlängert somit die Standzeit des Werkzeugs. Zudem kann vorzugsweise die Verschleißschutzbeschichtung entfernt und erneuert werden, um das Werkzeug dann erneut einsetzen zu können. Die Verschleißschutzbeschichtung ist zum wenigstens abschnittsweisen Kontaktieren des Werkstücks vorgesehen.

Zudem ist vorgesehen, dass die ein oder mehreren Funktionsabschnitte wenigstens abschnittsweise eine Sperrbeschichtung zum Schutz des Werkzeugs beim Entschichten aufweisen und dass, vorzugsweise, die Sperrbeschichtung Titan umfasst. Hierdurch kann die Lebensdauer des Werkzeugs erhöht werden, da insbesondere die nicht mit der Verschleißschutzbeschichtung versehenen Bereiche des Werkstücks, vorzugsweise des Grundkörpers, beim chemischen Entschichten vor den verwendeten Chemikalien geschützt werden. Somit kann insbesondere das sogenannte "Cobalt Leaching" minimiert werden. Sperrbeschichtungen umfassend Titan haben sich dabei als besonders resistent gegen das Entschichten von Verschleißschutzbeschichtungen herausgestellt. Titan muss dabei in der Sperrbeschichtung nicht elementar vorliegen, sondern kann alternativ oder zusätzlich als Teil einer chemischen Verbindung in der Sperrbeschichtung vorliegen, beispielsweise als Titannitrid. Die Sperrbeschichtung ist vorzugsweise zum Schutz des Werkzeugs, vorzugsweise des Grundkörpers, beim chemischen Entschichten, vorzugsweise wenigstens eines Werkstückkontaktabschnitts der ein oder mehreren Werkstückkontaktabschnitte, vorgesehen. Vorzugsweise kann vorgesehen sein, dass die Oberfläche des Werkzeugs, vorzugsweise des Grundkörpers, durch die ein oder mehreren Werkzeugkontaktabschnitte und die ein oder mehreren Funktionsabschnitte gebildet wird, die ein oder mehreren Werkstückkontaktabschnitte jeweils vollständig die Verschleißschutzbeschichtung aufweisen und/oder die ein oder mehreren Funktionsabschnitte und/oder die ein oder mehreren Werkstückkontaktabschnitte jeweils vollständig die Sperrbeschichtung aufweisen. Somit wird sichergestellt, dass jeder Abschnitt der Oberfläche durch eine Beschichtung geschützt ist. Die Verschleißschutzbeschichtung und/oder die Sperrbeschichtung können jeweils eine Schichtdicke im Dünnschicht-Bereich aufweisen. Hierdurch wird eine ausreichende Schichtdicke erzielt, ohne das Werkzeug wesentlich zu verdicken.

Gemäß einer Ausgestaltung des beschichteten Werkzeugs ist vorgesehen, dass die Verschleißschutzbeschichtung Aluminium, Stickstoff und/oder Chrom umfasst. Verschleißschutzbeschichtungen umfassend diese Elemente haben sich als besonders verschleißschutzbeständig, insbesondere beim Bearbeiten von Werkstückverzahnung, herausgestellt. Aluminium, Stickstoff und/oder Chrom muss dabei in der Verschleißschutzbeschichtung nicht elementar vorliegen, sondern kann alternativ oder zusätzlich als Teil einer chemischen Verbindung in der Verschleißschutzbeschichtung vorliegen.

Alternativ oder zusätzlich ist vorgesehen, dass die Verschleißschutzbeschichtung eine Schichtdicke von wenigstens 0,5 µm, vorzugsweise wenigstens 1 µm, insbesondere wenigstens 1,5 µm und/oder höchstens 5 µm, vorzugsweise höchstens 4 µm, insbesondere höchstens 3 µm, aufweist. Hierdurch wird eine ausreichende Schichtdicke erzielt, um die gewünschte Verschleißbeständigkeit zu erreichen, ohne das Werkzeug wesentlich zu verdicken.

Gemäß einer Ausgestaltung des beschichteten Werkzeugs ist vorgesehen, dass die Sperrbeschichtung Stickstoff, vorzugweise Titannitrid, Aluminium, vorzugsweise Aluminium-Titan-Nitrid, und/oder Silizium, vorzugsweise Titandisilicid, umfasst. Sperrbeschichtungen umfassend diese Elemente haben sich als besonders resistent gegen das chemische Entschichten von Verschleißschutzbeschichtungen, insbesondere beim Entschichten von Aluminium, Stickstoff und/oder Chrom umfassenden Verschleißschutzbeschichtungen herausgestellt. Stickstoff und/oder Silizium muss dabei in der Sperrbeschichtung nicht elementar vorliegen, sondern kann alternativ oder zusätzlich als Teil einer chemischen Verbindung in der Sperrbeschichtung vorliegen. Stickstoff, vorzugsweise Titannitrid, Aluminium, vorzugsweise Aluminium-Titan-Nitrid, und/oder Silizium, vorzugsweise Titandisilicid, kann dabei alternativ oder zusätzlich zu Titan in der Sperrbeschichtung vorgesehen sein. Ebenso können alternativ oder zusätzliche weitere Elemente in der Sperrbeschichtung vorgesehen sein.

Alternativ oder zusätzlich ist vorgesehen, dass die Sperrbeschichtung eine Schichtdicke von wenigstens 0,1 µm, vorzugsweise wenigstens 0,5 µm, insbesondere wenigstens 0,1 µm und/oder höchstens 5 µm, vorzugsweise höchstens 3,5 µm, insbesondere höchstens 2,5 µm, aufweist. Hierdurch wird eine ausreichende Schichtdicke erzielt, um die gewünschte Resistenz gegen chemisches Entschichten zu erreichen, ohne das Werkzeug wesentlich zu verdicken. Somit können Passungen, beispielsweise in Bereichen in denen das Werkzeug mit einem anderen Element, beispielsweise einer Werkzeugaufnahme, verbunden ist, auf einfache Weise trotz der zusätzlichen Beschichtung eingehalten werden.

Gemäß einer Ausgestaltung des beschichteten Werkzeugs ist vorgesehen, dass die ein oder mehreren Werkstückkontaktabschnitte wenigstens abschnittsweise die Sperrbeschichtung aufweisen. Hierdurch kann zum einen auf einfache Weise verhindert werden, dass bei einem chemischen Entschichten der Verschleißschutzbeschichtung nach dem Entfernen der Verschleißschutzbeschichtung direkt der darunter liegende Grundkörper durch das Entschichtungsmittel angegriffen wird. Dies ist insbesondere von Vorteil, wenn die Verschleißschutzbeschichtung nicht gleichmäßig verschlissen ist. Zudem kann hierdurch die Herstellung des Werkstücks vereinfacht werden, da bei der Herstellung nicht darauf geachtet werden muss auf welche Bereiche die Sperrbeschichtung ausschließlich aufgetragen werden darf oder nicht vorgesehen werden muss die Sperrbeschichtung an einigen Stellen wieder zu entfernen. Vorzugsweise ist vorgesehen, dass die Sperrbeschichtung in den ein oder mehreren Werkstückkontaktabschnitten wenigstens abschnittsweise eine geringere Schichtdicke aufweist als die Sperrbeschichtung in den ein oder mehreren Funktionsabschnitten. Hierdurch wird vermieden, dass es im Bereich der ein oder mehreren Werkstückkontaktabschnitten durch das Auftragen sowohl der Sperrbeschichtung als auch der Verschleißschutzbeschichtung zu einem ungewünschten Verdicken des Werkzeugs durch die Beschichtung kommt.

Alternativ oder zusätzlich ist vorgesehen, dass die ein oder mehreren Funktionsabschnitte wenigstens abschnittsweise die Verschleißschutzbeschichtung aufweisen. Hierdurch kann ein Verschleiß dieser Bereiche vermindert oder gar verhindert werden, wenn es beispielsweise zu einem ungewollten Kontakt der Funktionsabschnitte mit einem Werkstück kommt. Vorzugsweise weisen die ein oder mehreren Funktionsabschnitte, vorzugsweise ausschließlich, direkt angrenzend an die ein oder mehreren Werkstückkontaktabschnitte die Verschleißschutzbeschichtung auf.

Alternativ oder zusätzlich ist vorgesehen, dass in den ein oder mehreren Werkstückkontaktabschnitten die Verschleißschutzbeschichtung wenigstens abschnittsweise auf dem Grundkörper und/oder auf der Sperrbeschichtung angeordnet ist. Indem die Verschleißschutzbeschichtung unmittelbar auf dem Grundkörper angeordnet ist, kann ein ungewünschtes Verdicken des Werkzeugs wenigstens minimiert werden. Durch ein Anordnen auf der Sperrbeschichtung, kann durch die Sperrbeschichtung verhindert werden, dass beim chemischen Entschichten der Verschleißschutzbeschichtung der Grundkörper durch das Entschichtungsmittel angegriffen wird.

Alternativ oder zusätzlich ist vorgesehen, dass in den ein oder mehreren Werkstückkontaktabschnitten die Sperrbeschichtung auf dem Grundkörper angeordnet ist. Durch das unmittelbare Auftragen der Sperrbeschichtung auf den Grundkörper kann verhindert werden, dass beim chemischen Entschichten der Verschleißschutzbeschichtung der Grundkörper durch das Entschichtungsmittel angegriffen wird.

Alternativ oder zusätzlich ist vorgesehen, dass in den ein oder mehreren Funktionsabschnitten die Sperrbeschichtung auf dem Grundkörper angeordnet ist. Durch das unmittelbare Auftragen der Sperrbeschichtung auf den Grundkörper kann verhindert werden, dass beim chemischen Entschichten der Verschleißschutzbeschichtung der Grundkörper durch das Entschichtungsmittel angegriffen wird.

Alternativ oder zusätzlich ist vorgesehen, dass die Sperrbeschichtung wenigstens abschnittsweise eine niedrigere Schichtdicke in wenigstens einem Werkstückkontaktabschnitt der ein oder mehreren Werkstückkontaktabschnitt aufweist, in welchem wenigstens einen Werkstückkontaktabschnitt die Verschleißschutzbeschichtung vorzugsweise wenigstens abschnittsweise auf der Sperrbeschichtung angeordnet ist, als die Sperrbeschichtung wenigstens abschnittsweise in wenigstens einem Funktionsabschnitt der ein oder mehreren Funktionsabschnitte. Würde man die Sperrbeschichtung unterhalb der aufgetragenen Verschleißschutzbeschichtung mit einer vergleichbaren Schichtdicke auftragen wie in einem Funktionsabschnitt, würde dies zu einer schlechteren Schichthaftung der Verschleißschutzbeschichtung führen. Zudem kann durch eine entsprechende Ausgestaltung es vereinfacht werden, dass die Beschichtung in den Werkstückkontaktabschnitt nicht zu dick wird. Ferner kann durch die dünnere Sperrbeschichtung unterhalb der Verschleißschutzbeschichtung einfacher sichergestellt werden, dass die Sperrbeschichtung bei jeder Aufbereitung des Werkzeugs, beispielsweise durch Strahlen und/oder Verrunden, abgetragen wird, sodass die Sperrbeschichtung beim erneuten Beschichten wieder in genau der gewünschten Schichtdicke aufgetragen ist.

Gemäß einer Ausgestaltung des beschichteten Werkzeugs ist vorgesehen, dass das Werkzeug, vorzugweise der Grundkörper, wenigstens eine Werkzeug-Verzahnung aufweist. Hierdurch lassen sich beispielsweise Bearbeitungsverfahren für Werkstück-Verzahnungen wie das Wälzschälen und/oder das Wälzfräsen mittels des Werkezeugs umsetzten. Die Werkzeug-Verzahnung ist vorzugsweise um die Rotationsachse herum angeordnet und/oder erstreckt sich entlang der Rotationsachse.

Zudem ist vorzugsweise vorgesehen, dass die Werkzeug-Verzahnung ein oder mehrere Stirnflächen, aufweist, ein oder mehrere Zähne aufweist, wobei die ein oder mehreren Zähne jeweils wenigstens eine Zahnflanke, vorzugsweise wenigstens zwei Zahnflanken, wenigstens eine Zahnkopffläche und/oder wenigstens eine Zahnfußfläche aufweisen, und/oder ein oder mehrere Schneidekanten und/oder ein oder mehrere Schneideflächen, vorzugsweise jeweils wenigstens abschnittsweise angeordnet an wenigstens einer Stirnfläche der ein oder mehreren Stirnflächen der Werkzeug-Verzahnung, aufweist. Hierbei handelt es sich um Bestandteile vieler üblicher Werkzeuge für die Bearbeitung von Werkstück-Verzahnungen, insbesondere der Bestandteile die mit dem Werkstück, vorzugweise der Werkstück-Verzahnung, in Kontakt, vorzugsweise spanabhebenden Eingriff, kommen können. Diese Bestandteile des Werkzeugs bieten sich dabei besonders für das Beschichten mit einer Verschleißschutzbeschichtung an. Die ein oder mehreren Stirnflächen, die jeweilige Zahnflanke, vorzugsweise die jeweiligen zwei Zahnflanken, die jeweilige Zahnkopffläche und/oder die jeweilige Zahnfußfläche sind daher vorzugsweise dazu vorgesehen während des Bearbeitens der Werkstück-Verzahnung mit dem Werkstück, vorzugsweise der Werkstück-Verzahnung, in Kontakt, vorzugsweise spanabhebenden Eingriff, zu kommen. Die ein oder mehreren Schneidekanten und/oder ein oder mehrere Schneideflächen sind vorzugsweise an derselben Stirnfläche der ein oder mehreren Stirnflächen der Werkzeug-Verzahnung angeordnet und/oder es sind an gegenüberliegenden Stirnflächen der ein oder mehreren Stirnflächen der Werkzeug-Verzahnung jeweils ein oder mehrere Schneidekanten und/oder ein oder mehrere Schneideflächen angeordnet.

Gemäß einer Ausgestaltung des beschichteten Werkzeugs ist vorgesehen, dass die ein oder mehreren Stirnflächen der Werkzeug-Verzahnung wenigstens abschnittsweise einen Werkstückkontaktabschnitt der ein oder mehreren Werkstückkontaktabschnitte umfassen, vorzugsweise bilden, und, vorzugsweise, wenigstens abschnittweise die Verschleißschutzbeschichtung aufweist, dass die Zahnflanke, vorzugsweise die zwei Zahnflanken, die Zahnkopffläche und/oder die Zahnfußfläche der ein oder mehreren Zähne der Werkzeug-Verzahnung jeweils wenigstens abschnittsweise einen Werkstückkontaktabschnitt der ein oder mehreren Werkstückkontaktabschnitte umfasst, vorzugsweise bildet, und, vorzugsweise, wenigstens abschnittweise die Verschleißschutzbeschichtung aufweist, und/oder dass die ein oder mehreren Schneidekanten und/oder die ein oder mehreren Schneideflächen der Werkzeug-Verzahnung jeweils wenigstens abschnittsweise einen Werkstückkontaktabschnitt der ein oder mehreren Werkstückkontaktabschnitte umfassen, vorzugsweise bilden, und, vorzugsweise, wenigstens abschnittweise die Verschleißschutzbeschichtung aufweisen. Somit werden insbesondere die oftmals bei der Bearbeitung einer Werkstück-Verzahnung mit dem Werkstück, insbesondere der Werkstück-Verzahnung, in Kontakt kommenden Abschnitte des Werkstücks mit der Verschleißschutzbeschichtung versehen.

Gemäß einer Ausgestaltung des beschichteten Werkzeugs ist vorgesehen, dass das Werkzeug, vorzugsweise der Grundkörper, ein Grundelement aufweist. Das Grundelement kann einen Schaft, vorzugsweise zur Verbindung mit einer Werkzeugaufnahme, umfassen. Das Grundelement ist vorzugsweise um die Rotationsachse herum angeordnet und/oder erstreckt sich entlang der Rotationsachse. Das Grundelement ist vorzugsweise nicht für den Kontakt mit dem Werkstück, insbesondere der Werkstück-Verzahnung, während der Bearbeitung des Werkstücks, insbesondere der Werkstück-Verzahnung, vorgesehen.

Vorzugsweise ist zudem vorgesehen, dass die Werkzeug-Verzahnung an dem Grundelement angeordnet ist. Bei dem Grundelement handelt es sich somit vorzugsweise um den Bereich oder die Bereiche des Grundkörpers, die nicht durch die Werkzeug-Verzahnung gebildet werden.

Alternativ oder zusätzlich ist zudem vorzugsweise vorgesehen, dass das Grundelement ein oder mehrere äußere Flächen aufweist. Vorzugsweise bilden die ein oder mehreren äußeren Flächen wenigstens abschnittsweise die äußere Oberfläche des Werkzeugs, vorzugsweise des Grundkörpers, insbesondere des Grundelements, und/oder die ein oder mehreren äußeren Flächen sind wenigstens abschnittsweise gekrümmt, vorzugsweise bogenförmig, insbesondere zylindrisch, ausgestaltet. Die wenigstens gekrümmte Ausgestaltung bietet sich insbesondere für rotierende Werkzeuge an.

Gemäß einer Ausgestaltung des beschichteten Werkzeugs ist vorgesehen, dass das Werkzeug, vorzugsweise der Grundkörper, insbesondere die Werkzeug-Verzahnung und/oder das Grundelement, eine Öffnung, vorzugsweise ausgestaltet als Durchgangsöffnung, aufweist. Die Öffnung vereinfacht eine Positionierung und/oder Fixierung des Werkzeugs zu der Werkzeugaufnahme, insbesondere radial zur Rotationsachse. Die Öffnung ist vorzugsweise um die Rotationsachse herum angeordnet und/oder erstreckt sich entlang der Rotationsachse. Die Öffnung ist vorzugsweise nicht für den Kontakt mit dem Werkstück, insbesondere der Werkstück-Verzahnung, während der Bearbeitung des Werkstücks, insbesondere der Werkstück-Verzahnung, vorgesehen.

Vorzugsweise ist zudem vorgesehen, dass die Öffnung ein oder mehrere innere Flächen aufweist. Vorzugsweise bilden die ein oder mehreren inneren Flächen wenigstens abschnittsweise die innere Oberfläche des Werkzeugs, vorzugsweise des Grundkörpers, insbesondere des Grundelements und/oder der Verzahnung, und/oder die ein oder mehreren inneren Flächen sind wenigstens abschnittsweise gekrümmt, vorzugsweise bogenförmig, insbesondere zylindrisch, ausgestaltet. Die wenigstens gekrümmte Ausgestaltung bietet sich insbesondere für rotierende Werkzeuge an

Alternativ oder zusätzlich ist zudem vorzugsweise vorgesehen, dass die Öffnung ein oder mehrere Öffnungs-Planflächen aufweist. Die Öffnung vereinfacht eine Positionierung und/oder Fixierung des Werkzeugs zu der Werkzeugaufnahme, insbesondere axial zur Rotationsachse. Die ein oder mehreren Öffnungsplanfläche sind wenigstens abschnittsweise, vorzugsweise überwiegend, insbesondre vollständig, eben.

Gemäß einer Ausgestaltung des beschichteten Werkzeugs ist vorgesehen, dass das Werkzeug, vorzugsweise der Grundkörper, insbesondere das Grundelement, ein oder mehrere Werkzeug-Stirnflächen und/oder ein oder mehrere Werkzeug-Planflächen aufweist. Die ein oder mehreren Werkzeug-Stirnflächen und/oder die ein oder mehreren Werkzeug-Planfläche können als Anschlag für eine Werkzeugaufnahme dienen und/oder sind vorzugsweise nicht für den Kontakt mit dem Werkstück, insbesondere der Werkstück-Verzahnung, während der Bearbeitung des Werkstücks, insbesondere der Werkstück-Verzahnung, vorgesehen.

Zudem ist vorzugsweise vorgesehen, dass die ein oder mehreren Werkzeug-Stirnflächen und/oder die ein oder mehreren Werkzeug-Planflächen von der Werkzeug-Verzahnung, vorzugsweise wenigstens einer der Stirnflächen der ein oder mehreren Stirnflächen der Werkzeug-Verzahnung, beabstandet sind. Bei den ein oder mehreren Werkzeug-Stirnflächen und/oder den ein oder mehreren Werkzeug-Planflächen handelt es sich somit nicht um eine Stirnfläche der Werkzeug-Verzahnung. Vorzugsweise sind die ein oder mehreren Werkzeug-Stirnflächen und/oder die ein oder mehreren Werkzeug-Planflächen, vorzugsweise entlang der Rotationsachse, gegenüberliegend zu wenigstens einer der Stirnflächen der ein oder mehreren Stirnflächen der Werkzeug-Verzahnung angeordnet. Die ein oder mehreren Werkzeug-Planflächen sind wenigstens abschnittsweise, vorzugsweise überwiegend, insbesondre vollständig, eben.

Gemäß einer Ausgestaltung des beschichteten Werkzeugs ist vorgesehen, dass das Werkzeug, vorzugsweise der Grundkörper, insbesondere das Grundelement, einen Befestigungsabschnitt zum Befestigen des Werkzeugs an einer Werkzeugaufnahme einer Werkzeugmaschine aufweist. Somit kann das Werkzeug auf einfache Weise mit einer Werkzeugmaschine verbunden werden. Der Befestigungsabschnitt ist vorzugsweise nicht für den Kontakt mit dem Werkstück, insbesondere der Werkstück-Verzahnung, während der Bearbeitung des Werkstücks, insbesondere der Werkstück-Verzahnung, vorgesehen. Der Befestigungsabschnitt kann einen Zentrierabschnitt zum Zentrieren des Werkzeugs relativ zu der Werkzeugaufnahme und/oder Spannabschnitt zum Spannen des Werkzeugs relativ zu der Werkzeugaufnahme aufweisen. Hierdurch wird eine sichere und präzise Bearbeitung mittels des Werkzeugs vereinfacht.

Gemäß einer Ausgestaltung des beschichteten Werkzeugs ist vorgesehen, dass das Grundelement, vorzugsweise die ein oder mehreren äußeren Flächen, wenigstens abschnittsweise einen Funktionsabschnitt der ein oder mehrere Funktionsabschnitte umfassen, vorzugsweise bilden, und, vorzugsweise, wenigstens abschnittweise die Sperrbeschichtung aufweisen, dass die Öffnung, vorzugsweise die ein oder mehreren Öffnungs-Planflächen und/oder die ein oder mehreren inneren Flächen, wenigstens abschnittsweise einen Funktionsabschnitt der ein oder mehrere Funktionsabschnitte umfassen, vorzugsweise bilden, und, vorzugsweise, wenigstens abschnittweise die Sperrbeschichtung aufweisen, dass die ein oder mehreren Werkzeug-Stirnflächen und/oder die ein oder mehreren Werkzeug-Planflächen wenigstens abschnittsweise einen Funktionsabschnitt der ein oder mehrere Funktionsabschnitte umfasst, vorzugsweise bilden, und, vorzugsweise, wenigstens abschnittweise die Sperrbeschichtung aufweisen, und/oder dass der Befestigungsabschnitt wenigstens abschnittsweise einen Funktionsabschnitt der ein oder mehrere Funktionsabschnitte umfasst, vorzugsweise bildet, und, vorzugsweise, wenigstens abschnittweise die Sperrbeschichtung aufweist. Somit werden insbesondere die oftmals bei der Bearbeitung einer Werkstück-Verzahnung mit dem Werkstück, insbesondere der Werkstück-Verzahnung, nicht in Kontakt kommenden Abschnitte des Werkzeugs mit der Sperrbeschichtung versehen. Vorzugsweise ist vorgesehen, dass das ganze Grundelement wenigstens einen Funktionsabschnitt der ein oder mehrere Funktionsabschnitte umfasst, vorzugsweise bildet und/oder das ganze Grundelement die Sperrbeschichtung aufweist. Hierdurch wird es vereinfacht, dass beim Entschichten das Entschichtungsmittel das Werkzeug, insbesondere das Grundelement, nicht angreifen kann. Vorzugsweise ist vorgesehen, dass alle inneren Flächen wenigstens einen Funktionsabschnitt der ein oder mehrere Funktionsabschnitte umfassen, vorzugsweise bilden. Hierdurch wird es ebenfalls vereinfacht, dass beim Entschichten das Entschichtungsmittel das Werkzeug, insbesondere die Öffnung, nicht angreifen kann. Vorzugsweise ist vorgesehen, dass alle äußeren Flächen wenigstens einen Funktionsabschnitt der ein oder mehrere Funktionsabschnitte umfassen, vorzugsweise bilden. Hierdurch wird es ebenfalls vereinfacht, dass beim Entschichten das Entschichtungsmittel das Werkzeug, insbesondere das Grundelement, nicht angreifen kann. Es kann zudem vorgesehen sein, dass der Zentrierabschnitt und/oder der Spannabschnitt jeweils wenigstens abschnittsweise einen Funktionsabschnitt der ein oder mehrere Funktionsabschnitte umfassen, vorzugsweise bilden, und, vorzugsweise, jeweils wenigstens abschnittweise die Sperrbeschichtung aufweisen. Somit kann in diesen Bereichen ein Angriff durch das Entschichtungsmittel vermieden werden. Vorzugsweise ist zudem vorgesehen, dass die Sperrbeschichtung an der Öffnung, vorzugsweise den ein oder mehreren Öffnungs-Planflächen und/oder den ein oder mehreren inneren Flächen, an den ein oder mehreren Werkzeug-Stirnflächen und/oder an den ein oder mehreren Werkzeug-Planflächen eine höhere Schichtdicke aufweist als die Sperrbeschichtung in wenigstens einem anderen Funktionsabschnitt der ein oder mehreren Funktionsabschnitte. Eine höhere Schichtdicke der Sperrbeschichtung, vorzugsweise an der Öffnung, insbesondere den ein oder mehreren Öffnungs-Planflächen und/oder den ein oder mehreren inneren Flächen, vorzusehen bietet sich an, da hier der Verschleiß im Lebenszyklus des Werkzeugs besonders hoch ist. Somit kann gewährleistet werden, dass die entsprechenden Flächen langfristig geschützt sind.

Das Verfahren zum Herstellen eines beschichteten Werkzeugs, vorzugsweise eines beschichten Werkzeugs nach einem der Ansprüche 1 bis 11, umfasst den folgenden Schritt: a) Bereitstellen eines Werkzeugrohlings für ein beschichtetes Werkzeug zum Bearbeiten wenigstens einer Werkstück-Verzahnung eines Werkstücks, wobei der Werkzeugrohling einen Grundkörper umfasst. Das Werkzeug und/oder der Werkzeugrohling kann grundsätzlich entsprechend dem zuvor erläuterten beschichteten Werkzeug ausgestaltete sein. Die Ausführungen zum zuvor erläuterten beschichteten Werkzeug sind daher auf das Werkzeug und/oder den Werkzeugrohling des Verfahrens übertragbar, insbesondere sind die Ausführungen zum Grundkörper des zuvor erläuterten beschichteten Werkzeugs auf den Grundkörper des Werkzeugrohlings übertragbar. Beim Werkzeugrohling ist wenigstens im Schritt a) jedoch vorzugsweise noch keine Sperrbeschichtung, Verschleißschutzbeschichtung und/oder Werkzeug-Verzahnung vorgesehen. Der Grundköper kann wenigstens abschnittsweise aus Metall, vorzugsweise Eisen und/oder Stahl, hergestellt sein. Alternativ oder zusätzlich kann der Grundkörper wenigstens abschnittsweise aus Vollhartmetall, Pulvermetall und/oder Schnellarbeitsstahl hergestellt sein. Die Werkzeugverzahnung, vorzugsweise ein oder mehrere Schneidekanten und/oder ein oder mehrere Schneideflächen, kann wenigstens abschnittsweise aus einem anderen Material hergestellt sein als der Rest des Werkzeugs und/oder Werkzeugrohlings, vorzugsweise des Grundkörpers. Das Bearbeiten einer Werkstück-Verzahnung umfasst das, vorzugsweise erstmalige, Herstellen einer Werkstück-Verzahnung, beispielsweise aus einem Werkstückrohling, und/oder die Weiterverarbeitung einer Werkstück-Verzahnung. Das Werkzeug und/oder der Werkzeugrohling, vorzugsweise der Grundkörper, kann eine Rotationsachse aufweisen, um die sich das Werkzeug beim Bearbeiten dreht. Das Werkzeug, der Werkzeugrohling und/oder der Grundkörper kann vorzugsweise wenigstens abschnittsweise symmetrisch, vorzugsweise rotationssymmetrisch, in Bezug zu der Rotationsachse ausgestaltet sein. Bei dem Werkstück kann es sich um ein Zahnrad handeln. Bei dem Werkzeug kann es sich vorzugsweise um ein Wälzschälwerkzeug und/oder Wälzfräswerkzeug handeln und/oder bei dem Werkzeugrohling um einen Rohling für ein Wälzschälwerkzeug und/oder Wälzfräswerkzeug handeln. Aus dem Werkzeugrohling wird das herzustellende Werkzeug hergestellt.

Das Verfahren kann zudem, vorzugsweise nach dem Schritt a) und/oder vor dem Schritt b), den folgenden Schritt umfassen: a1) Primäres Vorbehandeln des Werkzeugrohlings, wobei der Werkzeugrohling wenigstens abschnittsweise gewaschen und/oder wenigstens abschnittsweise mechanisch bearbeitet, vorzugsweise geschliffen, wird. In Schritt a1) kann dabei der Werkzeugrohling in den ein oder mehreren Funktionsabschnitten und/oder in ein oder mehreren für die ein oder mehreren Funktionsabschnitte vorgesehenen Abschnitten mechanisch bearbeitet, vorzugsweise geschliffen, werden. Hierdurch können die ein oder mehreren Funktionsabschnitte für das Beschichten vorbereitet werden, um somit die Schichthaftung zu verbessern, und/oder es können die ein oder mehreren Funktionsabschnitte wenigstens abschnittsweise hergestellt werden. Alternativ oder zusätzlich wird in Schritt a1) die Öffnung, vorzugsweise die ein oder mehreren Öffnungs-Planflächen und/oder die ein oder mehreren inneren Flächen, mechanisch bearbeitet, vorzugsweise geschliffen. Hierdurch können die entsprechenden Bereiche für das Beschichten vorbereitet werden. Durch das Waschen kann ebenfalls die Schichthaftung verbessert werden.

Das Verfahren umfasst zudem den folgenden Schritt: b) Auftragen einer Sperrbeschichtung zum Schutz des Werkzeugs beim Entschichten wenigstens abschnittsweise in ein oder mehreren Funktionsabschnitten des Werkzeugrohlings, wobei die ein oder mehreren Funktionsabschnitte dazu vorgesehen sind während des Bearbeitens der Werkstück-Verzahnung mittels des Werkzeugs von dem Werkstück, vorzugsweise der Werkstück-Verzahnung, beabstandet zu sein, wobei, vorzugsweise, die Sperrbeschichtung Titan umfasst,. Hierdurch kann die Lebensdauer des aus dem Werkzeugrohlings hergestellten Werkzeugs erhöht werden, da insbesondere die nicht mit der Verschleißschutzbeschichtung versehenen Bereiche des hergestellten Werkstücks, vorzugsweise des Grundkörpers, beim chemischen Entschichten vor den verwendeten Chemikalien geschützt werden. Somit kann insbesondere das sogenannte "Cobalt Leaching" minimiert werden. Sperrbeschichtungen umfassend Titan haben sich dabei als besonders resistent gegen das Entschichten von Verschleißschutzbeschichtungen herausgestellt. Titan muss dabei in der Sperrbeschichtung nicht elementar vorliegen, sondern kann alternativ oder zusätzlich als Teil einer chemischen Verbindung in der Sperrbeschichtung vorliegen, beispielsweise als Titannitrid. Die Sperrbeschichtung ist vorzugsweise zum Schutz des Werkzeugs, vorzugsweise des Grundkörpers, beim chemischen Entschichten, vorzugsweise wenigstens eines Werkstückkontaktabschnitts der ein oder mehreren Werkstückkontaktabschnitte, vorgesehen. Die ein oder mehreren Funktionsabschnitte sind vorzugsweise zum Nicht-Kontaktieren des Werkstücks, vorzugweise der Werkstück-Verzahnung, während des Bearbeitens des Werkstücks, vorzugsweise der Werkstück-Verzahnung, mittels des (fertig hergestellten) Werkzeugs vorgesehen. Im Schritt b) kann die Sperrbeschichtung in zusätzlichen Abschnitten des Werkzeugrohlings und/oder Grundkörpers aufgetragen werden. Vorzugsweise kann die Sperrbeschichtung in Schritt b) auf den ein oder mehreren Werkstückkontaktabschnitten, ein oder mehreren für die ein oder mehreren Werkstückkontaktabschnitten vorgesehenen Abschnitten, dem gesamten Werkzeugrohling und/oder dem gesamten Grundkörper aufgetragen werden. Dies vereinfacht zum einen die Herstellung, da zumindest beim Auftragen der Sperrbeschichtung die Schicht nicht oder nur im geringeren Umfang selektiv aufgetragen werden muss. Zum anderen kann hierdurch die Sperrbeschichtung auch in Bereichen aufgetragen werden, die für das Auftragen der Verschleißschutzbeschichtung vorgesehen sind.

Das Verfahren kann zudem, vorzugsweise nach dem Schritt b) und/oder vor dem Schritt c), den folgenden Schritt umfassen: b1) Herstellen einer Werkzeug-Verzahnung an dem Werkzeugrohling, vorzugsweise dem Grundkörper des Werkzeugrohlings. Hierdurch wird das Werkzeug mit einer Werkzeug-Verzahnung versehen. Vorzugsweise werden hierdurch die ein oder mehreren Werkstückkontaktabschnitte wenigstens abschnittsweise hergestellt werden. Wenn der Schritt b1) nach dem Schritt b) und/oder vor dem Schritt c) erfolgt, können die ein oder mehreren Werkstückkontaktabschnitte und/oder die ein oder mehreren für die ein oder mehreren Werkstückkontaktabschnitten vorgesehenen Abschnitte von der Sperrbeschichtung wenigstens abschnittsweise befreit werden, sodass die nachfolgend aufzutragende Verschleißschutzbeschichtung wenigstens abschnittsweise direkt auf den Grundkörper aufgetragen werden kann. Ein selektives Auftragen der Sperrbeschichtung kann somit verringert oder gar komplett vermieden werden.

Das Verfahren kann zudem, vorzugsweise nach dem Schritt b), nach dem Schritt b1) und/oder vor dem Schritt c), den folgenden Schritt umfassen: b2) Sekundäres vorbehandeln des Werkzeugrohlings, wobei der Werkzeugrohling wenigstens abschnittsweise gewaschen und/oder wenigstens abschnittsweise mechanisch bearbeitet wird. Hierdurch wird der Rohling auf ein Auftragen der Verschleißschutzbeschichtung vorbereitet, insbesondere wird ein sicheres Haften der aufzutragenden Verschleißschutzbeschichtung vereinfacht. Das mechanische Bearbeiten im Schritt b2) umfasst vorzugsweise ein wenigstens abschnittsweises Verrunden von ein oder mehrere Kanten des Werkzeugrohlings, vorzugsweise des Grundkörpers des Werkzeugrohlings, Nassstrahlen des Werkzeugrohlings, vorzugsweise des Grundkörpers, Trockenstrahlen des Werkzeugrohlings, vorzugsweise des Grundkörpers, und/oder Gleitschleifen des Werkzeugrohlings, vorzugsweise des Grundkörpers.

Das Verfahren umfasst zudem den folgenden Schritt: c) Auftragen einer Verschleißschutzbeschichtung wenigstens abschnittsweise in ein oder mehreren Werkstückkontaktabschnitten des Werkzeugrohlings, wobei die ein oder mehreren Werkstückkontaktabschnitte dazu vorgesehen sind während des Bearbeitens der Werkstück-Verzahnung mittels des Werkzeugs mit dem Werkstück, vorzugsweise der Werkstück-Verzahnung, in Kontakt, vorzugsweise spanabhebenden Eingriff, zu kommen.. Die Verschleißschutzbeschichtung vermindert den Verschleiß des Werkzeugs und verlängert somit die Standzeit des Werkzeugs. Zudem kann vorzugsweise die Verschleißschutzbeschichtung entfernt und erneuert werden, um das Werkzeug dann erneut einsetzen zu können. Die Verschleißschutzbeschichtung ist zum wenigstens abschnittsweisen Kontaktieren des Werkstücks vorgesehen. Bei den ein oder mehreren Werkstückkontaktabschnitten handelt sich somit insbesondere um diejenigen Bereiche des (fertig hergestellten) Werkzeugs, die durch das Bearbeiten des Werkstücks und dem Kontakt mit dem Werkstück verschleißen. Im Schritt c) kann vorzugsweise vorgesehen sein die Verschleißschutzbeschichtung wenigstens abschnittsweise auf die ein oder mehreren Funktionsabschnitte aufzutragen. Hierdurch kann ein Verschleiß dieser Bereiche vermindert oder gar verhindert werden, wenn es beispielsweise zu einem ungewollten Kontakt der Funktionsabschnitte mit einem Werkstück kommt. Vorzugsweise wird die Verschleißschutzbeschichtung, vorzugsweise ausschließlich, direkt angrenzend an die ein oder mehreren Werkstückkontaktabschnitte auf die ein oder mehreren Funktionsabschnitte aufgetragen.

Vorzugsweise kann vorgesehen sein, dass die Oberfläche des Werkzeugrohlings, vorzugsweise des Grundkörpers des Werkzeugrohlings, durch die ein oder mehreren Werkzeugkontaktabschnitte und die ein oder mehreren Funktionsabschnitte wenigstens im Schritt b) und/oder Schritt c) gebildet wird, im Schritt b) die Sperrbeschichtung die ein oder mehreren Funktionsabschnitte, die ein oder mehreren für die ein oder mehreren Werkstückkontaktabschnitten vorgesehenen Abschnitte und/oder die ein oder mehreren Werkstückkontaktabschnitte jeweils vollständig bedeckend aufgetragen wird und/oder im Schritt c) die Verschleißschutzbeschichtung die ein oder mehreren Werkstückkontaktabschnitten jeweils vollständig bedeckend aufgetragen wird. Somit wird sichergestellt, dass jeder Abschnitt der Oberfläche durch eine Beschichtung geschützt ist. Die Verschleißschutzbeschichtung und/oder die Sperrbeschichtung können jeweils mit einer Schichtdicke im Dünnschicht-Bereich aufgetragen werden. Hierdurch wird eine ausreichende Schichtdicke erzielt, ohne das herzustellende Werkzeug wesentlich zu verdicken.

Vorzugsweise ist vorgesehen, dass der Werkzeugrohling, vorzugweise der Grundkörper des Werkzeugrohlings, wenigstens eine Werkzeug-Verzahnung aufweist. Hierdurch lassen sich beispielsweise Bearbeitungsverfahren für Werkstück-Verzahnungen wie das Wälzschälen und/oder das Wälzfräsen mittels des Werkezeugs umsetzten. Die Werkzeug-Verzahnung ist vorzugsweise um die Rotationsachse herum angeordnet und/oder erstreckt sich entlang der Rotationsachse.

Vorzugsweise ist vorgesehen, dass die Werkzeug-Verzahnung ein oder mehrere Stirnflächen, aufweist, ein oder mehrere Zähne aufweist, wobei die ein oder mehreren Zähne jeweils wenigstens eine Zahnflanke, vorzugsweise wenigstens zwei Zahnflanken, wenigstens eine Zahnkopffläche und/oder wenigstens eine Zahnfußfläche aufweisen, und/oder ein oder mehrere Schneidekanten und/oder ein oder mehrere Schneideflächen, vorzugsweise jeweils wenigstens abschnittsweise angeordnet an wenigstens einer Stirnfläche der ein oder mehreren Stirnflächen der Werkzeug-Verzahnung, aufweist. Hierbei handelt es sich um Bestandteile vieler üblicher Werkzeuge für die Bearbeitung von Werkstück-Verzahnungen, insbesondere der Bestandteile die mit dem Werkstück, vorzugweise der Werkstück-Verzahnung, in Kontakt, vorzugsweise spanabhebenden Eingriff, kommen können. Diese Bestandteile des Werkzeugs bieten sich dabei besonders für das Beschichten mit einer Verschleißschutzbeschichtung an. Die ein oder mehreren Stirnflächen, die jeweilige Zahnflanke, vorzugsweise die jeweiligen zwei Zahnflanken, die jeweilige Zahnkopffläche und/oder die jeweilige Zahnfußfläche sind daher vorzugsweise dazu vorgesehen während des Bearbeitens der Werkstück-Verzahnung mit dem Werkstück, vorzugsweise der Werkstück-Verzahnung, in Kontakt, vorzugsweise spanabhebenden Eingriff, zu kommen. Die ein oder mehreren Schneidekanten und/oder ein oder mehrere Schneideflächen sind vorzugsweise an derselben Stirnfläche der ein oder mehreren Stirnflächen der Werkzeug-Verzahnung angeordnet und/oder es sind an gegenüberliegenden Stirnflächen der ein oder mehreren Stirnflächen der Werkzeug-Verzahnung jeweils ein oder mehrere Schneidekanten und/oder ein oder mehrere Schneideflächen angeordnet.

Vorzugsweise ist vorgesehen, dass die ein oder mehreren Stirnflächen der Werkzeug-Verzahnung wenigstens abschnittsweise einen Werkstückkontaktabschnitt der ein oder mehreren Werkstückkontaktabschnitte umfassen, vorzugsweise bilden, und, vorzugsweise, in Schritt c) wenigstens abschnittweise mit der Verschleißschutzbeschichtung beauftragt werden, dass die Zahnflanke, vorzugsweise die zwei Zahnflanken, die Zahnkopffläche und/oder die Zahnfußfläche der ein oder mehreren Zähne der Werkzeug-Verzahnung jeweils wenigstens abschnittsweise einen Werkstückkontaktabschnitt der ein oder mehreren Werkstückkontaktabschnitte umfasst, vorzugsweise bildet, und, vorzugsweise, in Schritt c) wenigstens abschnittweise mit der Verschleißschutzbeschichtung beauftragt wird, und/oder dass die ein oder mehreren Schneidekanten und/oder die ein oder mehreren Schneideflächen der Werkzeug-Verzahnung jeweils wenigstens abschnittsweise einen Werkstückkontaktabschnitt der ein oder mehreren Werkstückkontaktabschnitte umfassen, vorzugsweise bilden, und, vorzugsweise, in Schritt c) wenigstens abschnittweise mit der Verschleißschutzbeschichtung beauftragt werden. Somit werden insbesondere die oftmals bei der Bearbeitung einer Werkstück-Verzahnung mit dem Werkstück, insbesondere der Werkstück-Verzahnung, in Kontakt kommenden Abschnitte des Werkstücks mit der Verschleißschutzbeschichtung versehen.

Vorzugsweis ist vorgesehen, dass der Werkzeugrohling, vorzugsweise der Grundkörper des Werkzeugrohlings, ein Grundelement aufweist. Das Grundelement kann einen Schaft, vorzugsweise zur Verbindung mit einer Werkzeugaufnahme, umfassen. Das Grundelement ist vorzugsweise um die Rotationsachse herum angeordnet und/oder erstreckt sich entlang der Rotationsachse. Das Grundelement ist vorzugsweise nicht für den Kontakt mit dem Werkstück, insbesondere der Werkstück-Verzahnung, während der Bearbeitung des Werkstücks, insbesondere der Werkstück-Verzahnung, vorgesehen.

Vorzugsweise ist zudem vorgesehen, dass die Werkzeug-Verzahnung an dem Grundelement angeordnet ist. Bei dem Grundelement handelt es sich somit vorzugsweise um den Bereich oder die Bereiche des Grundkörpers des Werkzeugrohlings, die nicht durch die Werkzeug-Verzahnung gebildet werden.

Alternativ oder zusätzlich ist zudem vorzugsweise vorgesehen, dass das Grundelement ein oder mehrere äußere Flächen aufweist. Vorzugsweise bilden die ein oder mehreren äußeren Flächen wenigstens abschnittsweise die äußere Oberfläche des Werkzeugrohlings, vorzugsweise des Grundkörpers des Werkzeugrohlings, insbesondere des Grundelements, und/oder die ein oder mehreren äußeren Flächen sind wenigstens abschnittsweise gekrümmt, vorzugsweise bogenförmig, insbesondere zylindrisch, ausgestaltet. Die wenigstens gekrümmte Ausgestaltung bietet sich insbesondere für rotierende Werkzeuge an.

Vorzugsweise ist vorgesehen, dass der Werkzeugrohling, vorzugsweise der Grundkörper des Werkzeugrohlings, insbesondere die Werkzeug-Verzahnung und/oder das Grundelement, eine Öffnung, vorzugsweise ausgestaltet als Durchgangsöffnung, aufweist. Die Öffnung vereinfacht eine Positionierung und/oder Fixierung des Werkzeugs zu der Werkzeugaufnahme, insbesondere radial zur Rotationsachse. Die Öffnung ist vorzugsweise um die Rotationsachse herum angeordnet und/oder erstreckt sich entlang der Rotationsachse. Die Öffnung ist vorzugsweise nicht für den Kontakt mit dem Werkstück, insbesondere der Werkstück-Verzahnung, während der Bearbeitung des Werkstücks, insbesondere der Werkstück-Verzahnung, vorgesehen.

Vorzugsweise ist zudem vorgesehen, dass die Öffnung ein oder mehrere innere Flächen aufweist. Vorzugsweise bilden die ein oder mehreren inneren Flächen wenigstens abschnittsweise die innere Oberfläche des Werkzeugrohlings, vorzugsweise des Grundkörpers oder Werkzeugrohlings, insbesondere des Grundelements und/oder der Verzahnung, und/oder die ein oder mehreren inneren Flächen sind wenigstens abschnittsweise gekrümmt, vorzugsweise bogenförmig, insbesondere zylindrisch, ausgestaltet. Die wenigstens gekrümmte Ausgestaltung bietet sich insbesondere für rotierende Werkzeuge an

Alternativ oder zusätzlich ist zudem vorzugsweise vorgesehen, dass die Öffnung ein oder mehrere Öffnungs-Planflächen aufweist. Die Öffnung vereinfacht eine Positionierung und/oder Fixierung des Werkzeugs zu der Werkzeugaufnahme, insbesondere axial zur Rotationsachse. Die ein oder mehreren Öffnungsplanfläche sind wenigstens abschnittsweise, vorzugsweise überwiegend, insbesondre vollständig, eben.

Vorzugsweise ist vorgesehen, dass der Werkzeugrohling, vorzugsweise der Grundkörper des Werkzeugrohlings, insbesondere das Grundelement, ein oder mehrere Werkzeug-Stirnflächen und/oder ein oder mehrere Werkzeug-Planflächen aufweist. Die ein oder mehreren Werkzeug-Stirnflächen und/oder die ein oder mehreren Werkzeug-Planfläche können als Anschlag für eine Werkzeugaufnahme dienen und/oder sind vorzugsweise nicht für den Kontakt mit dem Werkstück, insbesondere der Werkstück-Verzahnung, während der Bearbeitung des Werkstücks, insbesondere der Werkstück-Verzahnung, vorgesehen.

Zudem ist vorzugsweise vorgesehen, dass die ein oder mehreren Werkzeug-Stirnflächen und/oder die ein oder mehreren Werkzeug-Planflächen von der Werkzeug-Verzahnung, vorzugsweise wenigstens einer der Stirnflächen der ein oder mehreren Stirnflächen der Werkzeug-Verzahnung, beabstandet sind. Bei den ein oder mehreren Werkzeug-Stirnflächen und/oder den ein oder mehreren Werkzeug-Planflächen handelt es sich somit nicht um eine Stirnfläche der Werkzeug-Verzahnung. Vorzugsweise sind die ein oder mehreren Werkzeug-Stirnflächen und/oder die ein oder mehreren Werkzeug-Planflächen, vorzugsweise entlang der Rotationsachse, gegenüberliegend zu wenigstens einer der Stirnflächen der ein oder mehreren Stirnflächen der Werkzeug-Verzahnung angeordnet. Die ein oder mehreren Werkzeug-Planflächen sind wenigstens abschnittsweise, vorzugsweise überwiegend, insbesondre vollständig, eben.

Gemäß einer Ausgestaltung ist vorzugsweise vorgesehen, dass der Werkzeugrohling, vorzugsweise der Grundkörper des Werkzeugrohlings, insbesondere das Grundelement, einen Befestigungsabschnitt zum Befestigen des (fertig hergestellten) Werkzeugs an einer Werkzeugaufnahme einer Werkzeugmaschine aufweist. Somit kann das Werkzeug auf einfache Weise mit einer Werkzeugmaschine verbunden werden. Der Befestigungsabschnitt ist vorzugsweise nicht für den Kontakt mit dem Werkstück, insbesondere der Werkstück-Verzahnung, während der Bearbeitung des Werkstücks, insbesondere der Werkstück-Verzahnung, vorgesehen. Der Befestigungsabschnitt kann einen Zentrierabschnitt zum Zentrieren des Werkzeugs relativ zu der Werkzeugaufnahme und/oder Spannabschnitt zum Spannen des Werkzeugs relativ zu der Werkzeugaufnahme aufweisen. Hierdurch wird eine sichere und präzise Bearbeitung mittels des Werkzeugs vereinfacht.

Gemäß einer Ausgestaltung ist vorzugsweise vorgesehen, dass das Grundelement, vorzugsweise die ein oder mehreren äußeren Flächen, wenigstens abschnittsweise einen Funktionsabschnitt der ein oder mehrere Funktionsabschnitte umfassen, vorzugsweise bilden, und, vorzugsweise, in Schritt b) wenigstens abschnittweise mit der Sperrbeschichtung beauftragt werden, dass die Öffnung, vorzugsweise die ein oder mehreren Öffnungs-Planflächen und/oder die ein oder mehreren inneren Flächen, wenigstens abschnittsweise einen Funktionsabschnitt der ein oder mehrere Funktionsabschnitte umfassen, vorzugsweise bilden, und, vorzugsweise, in Schritt b) wenigstens abschnittweise mit der Sperrbeschichtung beauftragt werden, dass die ein oder mehreren Werkzeug-Stirnflächen und/oder die ein oder mehreren Werkzeug-Planflächen wenigstens abschnittsweise einen Funktionsabschnitt der ein oder mehrere Funktionsabschnitte umfasst, vorzugsweise bilden, und, vorzugsweise, in Schritt b) wenigstens abschnittweise mit der Sperrbeschichtung beauftragt werden, und/oder dass der Befestigungsabschnitt wenigstens abschnittsweise einen Funktionsabschnitt der ein oder mehrere Funktionsabschnitte umfasst, vorzugsweise bildet, und, vorzugsweise, in Schritt b) wenigstens abschnittweise mit der Sperrbeschichtung beauftragt werden. Somit werden insbesondere die oftmals bei der Bearbeitung einer Werkstück-Verzahnung mit dem Werkstück, insbesondere der Werkstück-Verzahnung, nicht in Kontakt kommenden Abschnitte des Werkzeugs mit der Sperrbeschichtung versehen. Vorzugsweise ist vorgesehen, dass das ganze Grundelement wenigstens einen Funktionsabschnitt der ein oder mehrere Funktionsabschnitte umfasst, vorzugsweise bildet und/oder das ganze Grundelement in Schritt b) mit der Sperrbeschichtung beauftragt wird. Hierdurch wird es vereinfacht, dass beim Entschichten das Entschichtungsmittel das Werkzeug, insbesondere das Grundelement, nicht angreifen kann. Vorzugsweise ist vorgesehen, dass alle inneren Flächen wenigstens einen Funktionsabschnitt der ein oder mehrere Funktionsabschnitte umfassen, vorzugsweise bilden. Hierdurch wird es ebenfalls vereinfacht, dass beim Entschichten das Entschichtungsmittel das Werkzeug, insbesondere die Öffnung, nicht angreifen kann. Vorzugsweise ist vorgesehen, dass alle äußeren Flächen wenigstens einen Funktionsabschnitt der ein oder mehrere Funktionsabschnitte umfassen, vorzugsweise bilden. Hierdurch wird es ebenfalls vereinfacht, dass beim Entschichten das Entschichtungsmittel das Werkzeug, insbesondere das Grundelement, nicht angreifen kann. Es kann zudem vorgesehen sein, dass der Zentrierabschnitt und/oder der Spannabschnitt jeweils wenigstens abschnittsweise einen Funktionsabschnitt der ein oder mehrere Funktionsabschnitte umfassen, vorzugsweise bilden, und, vorzugsweise, jeweils in Schritt b) wenigstens abschnittweise mit der Sperrbeschichtung beauftragt werden. Somit kann in diesen Bereichen ein Angriff durch das Entschichtungsmittel vermieden werden. Vorzugsweise ist zudem vorgesehen, dass die in Schritt b) die Sperrbeschichtung an der Öffnung, vorzugsweise den ein oder mehreren Öffnungs-Planflächen und/oder den ein oder mehreren inneren Flächen, an den ein oder mehreren Werkzeug-Stirnflächen und/oder an den ein oder mehreren Werkzeug-Planflächen mit einer höheren Schichtdicke aufgetragen wird als die Sperrbeschichtung in wenigstens einem anderen Funktionsabschnitt der ein oder mehreren Funktionsabschnitte.

Gemäß einer Ausgestaltung des Verfahrens ist vorgesehen, dass die Verschleißschutzbeschichtung Aluminium, Stickstoff und/oder Chrom umfasst. Verschleißschutzbeschichtungen umfassend diese Elemente haben sich als besonders verschleißschutzbeständig, insbesondere beim Bearbeiten von Werkstückverzahnung, herausgestellt. Aluminium, Stickstoff und/oder Chrom muss dabei in der Verschleißschutzbeschichtung nicht elementar vorliegen, sondern kann alternativ oder zusätzlich als Teil einer chemischen Verbindung in der Verschleißschutzbeschichtung vorliegen.

Alternativ oder zusätzlich ist vorgesehen, dass die Verschleißschutzbeschichtung im aufgetragenen Zustand, vorzugsweise nach dem Schritt c), eine Schichtdicke von wenigstens 0,5 µm, vorzugsweise wenigstens 1 µm, insbesondere wenigstens 1,5 µm und/oder höchstens 5 µm, vorzugsweise höchstens 4 µm, insbesondere höchstens 3 µm, aufweist. Hierdurch wird eine ausreichende Schichtdicke erzielt, um die gewünschte Verschleißbeständigkeit zu erreichen, ohne das herzustellende Werkzeug wesentlich zu verdicken.

Alternativ oder zusätzlich ist vorgesehen, dass die Sperrbeschichtung Stickstoff, vorzugweise Titannitrid, Aluminium, vorzugsweise Aluminium-Titan-Nitrid, und/oder Silizium, vorzugsweise Titandisilicid, umfasst. Sperrbeschichtungen umfassend diese Elemente haben sich als besonders resistent gegen das chemische Entschichten von Verschleißschutzbeschichtungen, insbesondere beim Entschichten von Aluminium, Stickstoff und/oder Chrom umfassenden Verschleißschutzbeschichtungen herausgestellt. Stickstoff und/oder Silizium muss dabei in der Sperrbeschichtung nicht elementar vorliegen, sondern kann alternativ oder zusätzlich als Teil einer chemischen Verbindung in der Sperrbeschichtung vorliegen. Stickstoff, vorzugsweise Titannitrid, Aluminium, vorzugsweise Aluminium-Titan-Nitrid, und/oder Silizium, vorzugsweise Titandisilicid, kann dabei alternativ oder zusätzlich zu Titan in der Sperrbeschichtung vorgesehen sein. Ebenso können alternativ oder zusätzliche weitere Elemente in der Sperrbeschichtung vorgesehen sein

Alternativ oder zusätzlich ist vorgesehen, dass die Sperrbeschichtung im aufgetragenen Zustand, vorzugsweise nach dem Schritt b), eine Schichtdicke von wenigstens 0,1 µm, vorzugsweise wenigstens 0,5 µm, insbesondere wenigstens 1 µm und/oder höchstens 5 µm, vorzugsweise höchstens 3,5 µm, insbesondere höchstens 2,5 µm, aufweist. Hierdurch wird eine ausreichende Schichtdicke erzielt, um die gewünschte Resistenz gegen chemisches Entschichten zu erreichen, ohne das herzustellende Werkzeug wesentlich zu verdicken. Somit können gewünschte Passungen, beispielsweise in Bereichen in denen das Werkzeug mit einem anderen Element, beispielsweise einer Werkzeugaufnahme, verbunden ist, auf einfache Weise eingehalten werden.

Gemäß einer Ausgestaltung des Verfahrens ist vorgesehen, dass in Schritt b) in den ein oder mehreren Funktionsabschnitten die Sperrbeschichtung wenigstens abschnittsweise auf dem Grundkörper aufgetragen wird. Durch das unmittelbare Auftragen der Sperrbeschichtung auf den Grundkörper kann verhindert werden, dass beim chemischen Entschichten der Verschleißschutzbeschichtung der Grundkörper durch das Entschichtungsmittel angegriffen wird.

Alternativ oder zusätzlich ist vorgesehen, dass in Schritt c) in den ein oder mehreren Werkstückkontaktabschnitten die Verschleißschutzbeschichtung wenigstens abschnittsweise auf dem Grundkörper aufgetragen wird. Indem die Verschleißschutzbeschichtung unmittelbar auf dem Grundkörper aufgetragen wird, kann ein ungewünschtes Verdicken des herzustellenden Werkzeugs wenigstens minimiert werden.

Gemäß einer Ausgestaltung des Verfahrens ist vorgesehen, dass in Schritt b) die Sperrbeschichtung wenigstens abschnittsweise in den ein oder mehreren Werkstückkontaktabschnitten und/oder ein oder mehreren für die ein oder mehreren Werkstückkontaktabschnitte vorgesehenen Abschnitten aufgetragen wird. Hierdurch kann zum einen auf einfache Weise verhindert werden, dass bei einem chemischen Entschichten der Verschleißschutzbeschichtung nach dem Entfernen der Verschleißschutzbeschichtung direkt der darunter liegende Grundkörper durch das Entschichtungsmittel angegriffen wird. Dies ist insbesondere von Vorteil, wenn die Verschleißschutzbeschichtung nicht gleichmäßig verschlissen ist. Zudem kann hierdurch die Herstellung des Werkstücks vereinfacht werden, da bei der Herstellung nicht darauf geachtet werden muss auf welche Bereiche die Sperrbeschichtung ausschließlich aufgetragen werden darf oder nicht vorgesehen werden muss die Sperrbeschichtung an einigen Stellen wieder zu entfernen. Bei den ein oder mehreren für die ein oder mehreren Werkstückkontaktabschnitte vorgesehenen Abschnitte handelt es sich um die entsprechenden bereits zuvor beschriebenen ein oder mehreren für die ein oder mehreren Werkstückkontaktabschnitte vorgesehenen Abschnitte. Vorzugsweise ist vorgesehen, dass in Schritt b) die Sperrbeschichtung in den ein oder mehreren Werkstückkontaktabschnitten und/oder den ein oder mehreren für die ein oder mehreren Werkstückkontaktabschnitte vorgesehenen Abschnitten wenigstens abschnittsweise mit einer geringeren Schichtdicke aufgetragen wird als die Sperrbeschichtung in den ein oder mehreren Funktionsabschnitten. Hierdurch wird vermieden, dass es im Bereich der ein oder mehreren Werkstückkontaktabschnitte durch das Auftragen sowohl der Sperrbeschichtung als auch der Verschleißschutzbeschichtung zu einem ungewünschten Verdicken des Werkzeugs durch die Beschichtung kommt.

Vorzugsweise ist zudem vorgesehen, dass in Schritt b) in den ein oder mehreren Werkstückkontaktabschnitten und/oder den ein oder mehreren für die ein oder mehreren Werkstückkontaktabschnitte vorgesehenen Abschnitten die Sperrbeschichtung wenigstens abschnittsweise auf dem Grundkörper aufgetragen wird. Durch das unmittelbare Auftragen der Sperrbeschichtung auf den Grundkörper kann verhindert werden, dass beim chemischen Entschichten der Verschleißschutzbeschichtung der Grundkörper durch das Entschichtungsmittel angegriffen wird.

Alternativ oder zusätzlich ist vorzugsweise vorgesehen, dass in Schritt c) in den ein oder mehreren Werkstückkontaktabschnitten die Verschleißschutzbeschichtung wenigstens abschnittsweise auf der Sperrbeschichtung aufgetragen wird. Durch ein Auftragen auf der Sperrbeschichtung, kann durch die Sperrbeschichtung verhindert werden, dass beim chemischen Entschichten der Verschleißschutzbeschichtung der Grundkörper durch das Entschichtungsmittel angegriffen wird. Es handelt sich vorzugsweise um die in Schritt b) aufgetragenen Sperrbeschichtung, auf die die Verschleißschutzbeschichtung aufgetragen wird.

Alternativ oder zusätzlich ist vorzugsweise vorgesehen, dass die in Schritt b) auf den ein oder mehreren Werkstückkontaktabschnitten und/oder den ein oder mehreren für die ein oder mehreren Werkstückkontaktabschnitte vorgesehenen Abschnitten aufgetragene Sperrbeschichtung wenigstens abschnittsweise entfernt wird, vorzugsweise bevor in Schritt c) die Verschleißschutzbeschichtung in den ein oder mehreren Werkstückkontaktabschnitten, insbesondere auf dem Grundkörper und/oder wenigstens abschnittsweise in den ein oder mehreren Entfernungsbereichen in den die Sperrbeschichtung entfernt wurde, wenigstens abschnittsweise aufgetragen wird. Somit muss beim Beschichten nicht darauf geachtet werden, in welchen Bereichen die Sperrbeschichtung aufgetragen wird, ohne dass es hierdurch zu einer Verdickung des Werkzeugs durch die Sperrbeschichtung in ungewünschten Bereichen kommt. Das Entfernen der Sperrbeschichtung kann mittels eines mechanischen Entfernens, beispielsweise mittels Nassstrahlens, Trockenstrahlens, Gleitschleifens, Abdrehens, Abfräsens und/oder Abschleifens, und/oder mittels eines chemischen Entfernens erfolgen.

Weitere Merkmale und Vorteile des Verfahrens ergeben sich aus der nachfolgenden Beschreibung von Ausführungsbeispielen, wobei auf die beigefügte Zeichnung Bezug genommen wird.

In der Zeichnung zeigen
- Fig. 1: ein Werkzeug in einer perspektivischen Ansicht,
- Fig. 2: ein Detail des Werkzeugs aus Fig. 1 in einer Schnittansicht mit vorgesehener Beschichtung,
- Fig. 3: ein alternatives Werkzeug in einer perspektivischen Ansicht,
- Fig. 4a: den Ausschnitt IVa des in Fig. 2 dargestellten Werkzeugs,
- Fig. 4b: eine zweite Variante der Beschichtung des Werkzeugs aus Fig. 2,
- Fig. 5a: den Ausschnitt Va des in Fig. 2 dargestellten Werkzeugs und
- Fig. 5b: eine zweite Variante der Beschichtung des Werkzeugs aus Fig. 2.

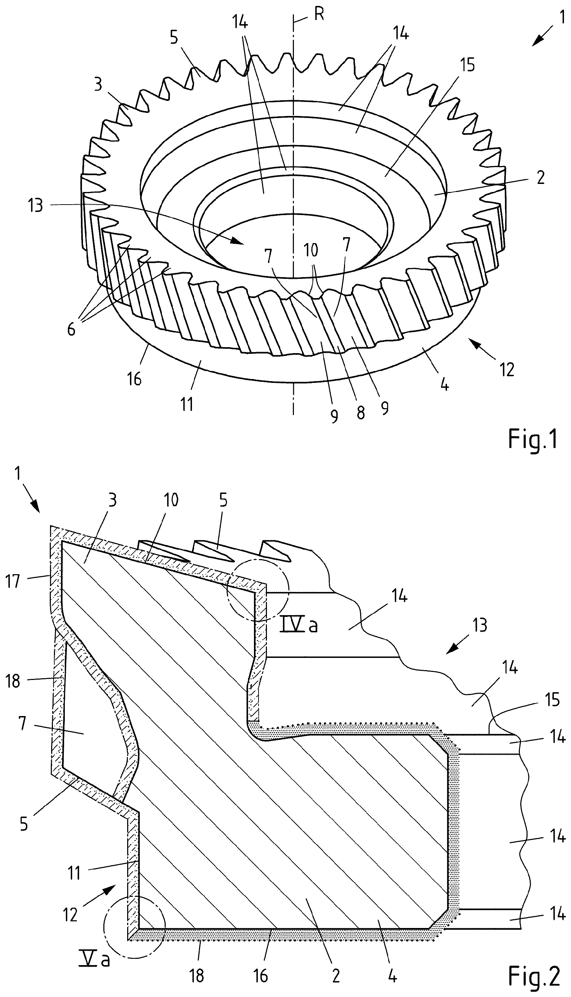

Fig. 1 zeigt ein Werkzeug 1 in einer perspektivischen Ansicht. Das Werkzeug 1 ist dabei beschichtet, wobei die Beschichtungen der Übersicht halber in Fig. 1 nicht hervorgehoben sind. Das Werkzeug 1 ist dabei für das Bearbeiten einer Werkzeug-Verzahnung vorgesehen, insbesondere ist das Werkzeug 1 zum Wälzschälen vorgesehen.

Das Werkzeug 1 umfasst einen Grundkörper 2. Der Grundkörper 2 umfasst wiederum eine Werkzeug-Verzahnung 3 sowie ein Grundelement 4, wobei die Werkzeug-Verzahnung 3 an dem Grundelement 4 angeordnet ist.

Die Werkzeug-Verzahnung 3 umfasst dabei unter anderem zwei Stirnflächen 5, wobei in Fig. 1 lediglich eine Stirnfläche 5 zu erkennen ist, und mehrere Zähne 6, wobei die Zähne 6 entlang des Umfangs der Werkzeug-Verzahnung 3 angeordnet sind. Die Zähne 6 weisen dabei jeweils zwei Zahnflanken 7, eine Zahnkopffläche 8 und zwei Zahnfußflächen 9 auf. Die Zahnfußfläche 9 eines Zahns 6 kann dabei die Zahnfußfläche 9 eines angrenzenden Zahns 6 wenigstens abschnittweise bilden, vorzugsweise teilen sich angrenzende Zähne 6 die Zahnfußfläche 9. Das Werkzeug 1 umfasst zudem Schneidekanten 10, welche an einer der Stirnflächen 5 des Werkzeugs 1 angeordnet sind. Es ist jedoch auch denkbar, dass Schneideflächen, beispielsweise wenigstens abschnittsweise durch wenigstens eine der Stirnflächen 5 gebildet, vorgesehen sind.

Das Grundelement 4 umfasst zudem eine äußere Fläche 11, welche zylinderförmig ausgestaltet ist. Die äußere Fläche 11 des Grundelements 4 dient bei der gezeigten Ausführungsform zudem als Befestigungsabschnitt 12 zum Befestigen des Werkzeugs 1 an einer Werkzeugaufnahme einer Werkzeugmaschine.

Das Werkzeug 1 umfasst darüber hinaus eine als Durchgangsöffnung ausgestaltete Öffnung 13, welche anteilig in der Werkzeug-Verzahnung 3 sowie in dem Grundelement 4 angeordnet ist. Die Öffnung 13 umfasst dabei mehrere, insbesondere zylinderförmige, innere Flächen 14 sowie eine Öffnungs-Planfläche 15.

Ferner umfasst das Werkzeug 1, insbesondere das Grundelement 4, eine Werkzeug-Stirnfläche 16 die als Werkzeug-Planfläche ausgestaltet ist und von den Stirnflächen 5 der Werkzeug-Verzahnung 3 beabstandet ist.

Fig. 2 zeigt ein Detail des Werkzeugs 1 aus Fig. 1 in einer Schnittansicht mit vorgesehener Beschichtung. Die Beschichtung umfasst dabei sowohl eine Verschleißschutzbeschichtung 17 sowie eine Sperrbeschichtung 18. Die Verschleißschutzbeschichtung 17 ist dafür vorgesehen die Standzeit des Werkzeugs 1 beim Bearbeiten einer Werkstück-Verzahnung zu erhöhen. Wenn die Verschleißschutzbeschichtung 17 zu stark verschlissen ist, wird die Verschleißschutzbeschichtung 17 mittels chemischen Entschichtens entfernt. Um zu verhindern, dass das hierfür verwendete Entschichtungsmittel den Grundkörper 2 angreift, ist die Sperrbeschichtung 18 zum Schutz des Grundkörpers 2 vorgesehen. Die Verschleißschutzbeschichtung 17 ist in Fig. 2 mit einer schraffierten Schraffur dargestellt sowie die Sperrbeschichtung 18 mit einer gepunkteten Schraffur. Die Verschleißschutzbeschichtung 17 sowie die Sperrbeschichtung 18 sind zur besseren Darstellung im Verhältnis zum restlichen Werkzeug 1 vergrößert dargestellt. Die Schichtdicke der Verschleißschutzbeschichtung 17 ist nämlich vorzugsweise im Bereich von wenigstens 0,5 µm bis höchstens 5 µm und die Schichtdicke der Sperrbeschichtung 18 im Bereich von wenigstens 0,1 µm bis höchstens 5 µm vorgesehen.

Bei der unter anderem in Fig. 1 und 2 dargestellten Ausführungsform des Werkzeugs 1 ist die Verschleißschutzbeschichtung 17 insbesondere in den Werkstückkontaktabschnitten angeordnet und die Sperrbeschichtung 18 insbesondere in den Funktionsabschnitten. Jedoch ist die Verschleißschutzbeschichtung 17 teilweise auch in an die Werkstückkontaktabschnitte angrenzenden Funktionsabschnitten angeordnet und die Sperrbeschichtung 18 auch in den Werkstückkontaktabschnitten. Hierbei weist die Sperrbeschichtung 18 in den Werkstückkontaktabschnitten eine niedrigere Schichtdicke auf als in den Funktionsabschnitten, um ein Verdicken des Werkzeugs 1 zu vermindern. Die Werkstückkontaktabschnitte sind dabei diejenigen Bereiche des Werkzeugs 1, die dazu vorgesehen sind während des Bearbeitens der Werkstück-Verzahnung mittels des Werkzeugs 1 mit der Werkstück-Verzahnung in Kontakt, vorzugsweise spanabhebenden Eingriff, zu kommen. Die Werkstückkontaktabschnitte werden bei der gezeigten Ausführungsform abschnittsweise durch die Werkzeug-Verzahnung 3, insbesondere den Stirnflächen 5 der Werkzeug-Verzahnung 3, den Zahnflanken 7, den Zahnkopfflächen 8, den Zahnfußflächen 9 sowie den Schneidekaten 10, gebildet. Die Funktionsabschnitte sind dabei diejenigen Bereiche des Werkzeugs 1, die dazu vorgesehen sind während des Bearbeitens der Werkstück-Verzahnung mittels des Werkzeugs 1 von der Werkstück-Verzahnung beabstandet zu sein. Die Funktionsabschnitte werden wiederum durch das Grundelement 4 sowie abschnittsweise durch den die Öffnung 13 bildenden Teil der Werkzeug-Verzahnung 3 gebildet, insbesondere den äußeren Flächen 11, den inneren Flächen 14, der Öffnungs-Planfläche 15 sowie der Werkzeug Stirnfläche 16.

Die Sperrbeschichtung 18 umfasst bei der gezeigten Ausführungsform Titannitrid und die Verschleißschutzbeschichtung 17 Aluminium, Stickstoff und Chrom. Eine Titan umfassende Sperrbeschichtung 18 hat sich nämlich als besonders resistent gegen Entschichtungsmittel zum Entschichten von Verschleißschutzbeschichtung 17, insbesondere Entschichtungsmittel zum Entschichten einer Aluminium, Stickstoff und Chrom umfassenden Verschleißschutzbeschichtung 17, herausgestellt.

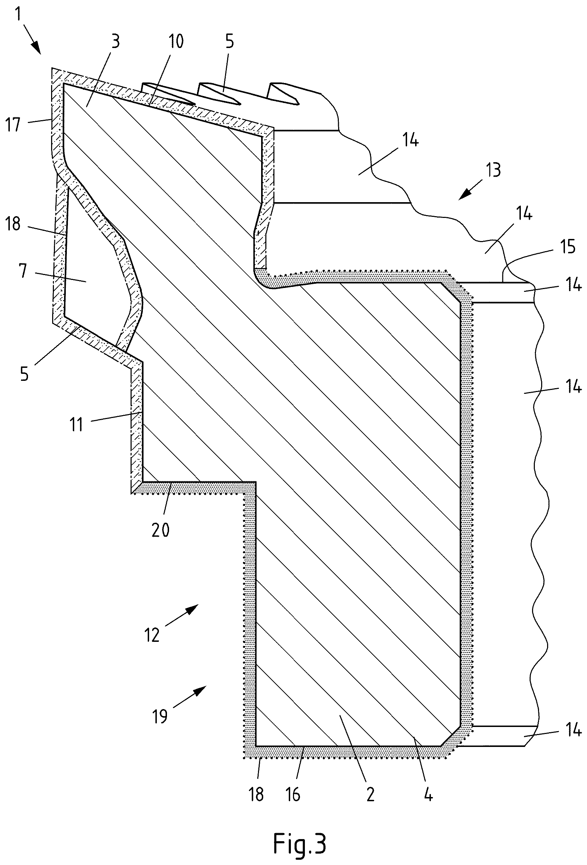

Fig. 3 zeigt ein alternatives Werkzeug 1 in einer perspektivischen Ansicht. Das Werkzeug 1 der Fig. 3 entspricht dabei im Wesentlichen dem Werkzeug der Fig. 1, wobei das Grundelement 4 lediglich verlängert wurde, sodass sich ein ausgeprägter Schaft 19 ergibt. Der Schaft 19 bietet sich dabei besonders für das Vorsehen eines Befestigungsabschnitt 12 zum Befestigen des Werkzeugs 1 an einer Werkzeugaufnahme einer Werkzeugmaschine an. Der Schaft 19 ist dabei ein Funktionsabschnitt des Werkzeugs 1. Zudem umfasst das Werkzeug 1, insbesondere das Grundelement, eine weitere Werkzeug-Planfläche 20.

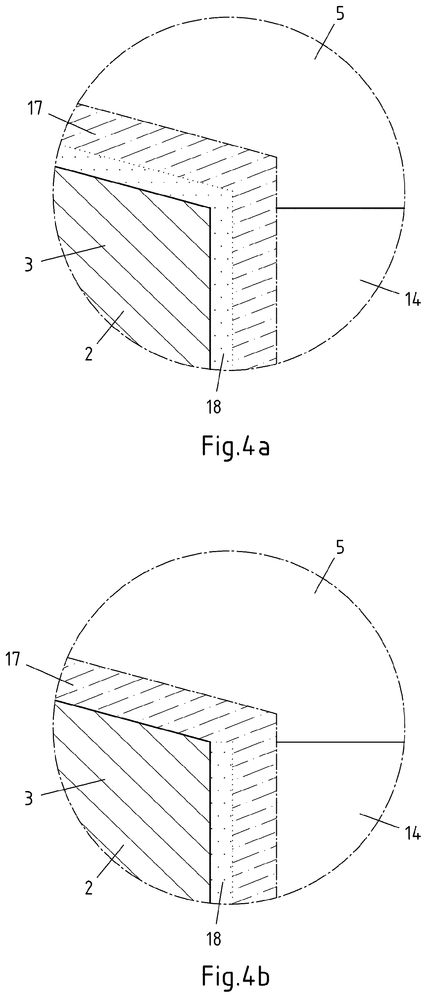

Fig. 4a zeigt den Ausschnitt IVa des in Fig. 2 dargestellten Werkzeugs 1. Hierbei ist im Detail die Beschichtung umfassend die Verschleißschutzbeschichtung 17 sowie die Sperrbeschichtung 18 zu erkennen. Zu erkennen ist, dass unter der Verschleißschutzbeschichtung 17 und auf dem Grundkörper 2 die Sperrbeschichtung 18 aufgetragen ist. Hierdurch kann beim Entschichten verhindert werden, dass bei einer ungleichmäßig verschlissenen Verschleißschutzbeschichtung 17 das Entschichtungsmittel den Grundkörper 2 angreift.

Fig. 4b zeigt eine zweite Variante der Beschichtung des Werkzeugs 1 aus Fig. 2. Der Ausschnitt der Fig. 4b entspricht dabei dem in Fig. 4a gezeigten Ausschnitt IVa, jedoch wurde die Anordnung der Beschichtungen teilweise verändert. In Fig. 4b ist nämlich zu erkennen, dass bei der gezeigten Ausführungsform die Verschleißschutzbeschichtung 17 - zumindest in dem dargestellten Werkstückkontaktabschnitt - unmittelbar auf dem Grundkörper 2 angeordnet ist sowie die Sperrbeschichtung 18 in dem dargestellten Funktionsabschnitt ebenfalls unmittelbar auf dem Grundkörper 2 angeordnet ist. In dem keine Sperrbeschichtung 18 in dem Werkstückkontaktabschnitt vorgesehen ist, kann ein zu starkes Verdicken des Werkzeugs 1 in den Werkstückkontaktabschnitten durch die Beschichtung vermieden werden. Um über weite Teile des Werkzeugs eine dünne Beschichtung zu erhalten, kann auch beispielsweise entweder die Verschleißschutzbeschichtung 17 lediglich in den Werkstückkontaktabschnitten aufgetragen werden und die Sperrbeschichtung 18 lediglich in den Funktionsabschnitten aufgetragen werden oder aber die Sperrbeschichtung 18 kann sowohl in den Werkstückkontaktabschnitten sowie den Funktionsabschnitten aufgetragen werden und vor dem Auftragen der Verschleißschutzbeschichtung 17 von den Werkstückkontaktabschnitten wieder entfernt werden.

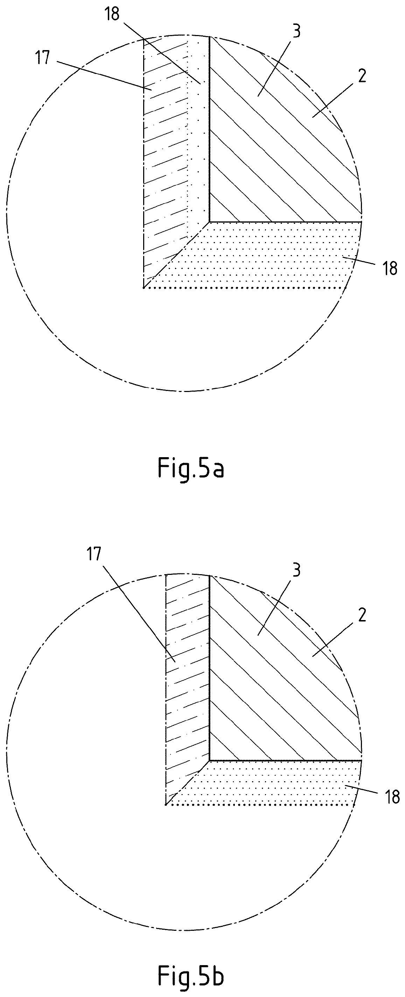

Fig. 5a zeigt den Ausschnitt Va des in Fig. 2 dargestellten Werkzeugs 1. Zu erkennen ist, dass an der äußeren Fläche 11 unter der Verschleißschutzbeschichtung 17 und auf dem Grundkörper 2 die Sperrbeschichtung 18 aufgetragen ist, wohingegen an der Werkzeug-Stirnfläche 16 lediglich die Sperrbeschichtung 18 aufgetragen ist.

Fig. 5b eine zweite Variante der Beschichtung des Werkzeugs aus Fig. 2. Der Ausschnitt der Fig. 5b entspricht dabei dem in Fig. 5a gezeigten Ausschnitt Va, jedoch wurde die Anordnung der Beschichtungen teilweise verändert. In Fig. 5b ist nämlich zu erkennen, dass bei der gezeigten Ausführungsform die Verschleißschutzbeschichtung 17 an der äußeren Fläche 11 unmittelbar auf dem Grundkörper 2 angeordnet und die Sperrbeschichtung 18 an der Werkzeug-Stirnfläche ebenfalls 16 unmittelbar auf dem Grundkörper 2 angeordnet ist.

### Bezugszeichenliste

- 1: Werkzeug
- 2: Grundkörper
- 3: Werkzeug-Verzahnung
- 4: Grundelement
- 5: Stirnfläche der Werkzeug-Verzahnung
- 6: Zahn
- 7: Zahnflanke
- 8: Zahnkopffläche
- 9: Zahnfußfläche
- 10: Schneidekante
- 11: Äußeren Fläche
- 12: Befestigungsabschnitt
- 13: Öffnung
- 14: Innere Fläche
- 15: Öffnungs-Planfläche
- 16: Werkzeug-Stirnfläche
- 17: Verschleißschutzbeschichtung
- 18: Sperrbeschichtung
- 19: Schaft
- 20: Werkzeug-Planfläche
- R: Rotationsachse

## Patentansprüche

1. Beschichtetes Werkzeug (1) zum Bearbeiten wenigstens einer Werkstück-Verzahnung eines Werkstücks, umfassend:
- einen Grundkörper (2),
- ein oder mehrere Werkstückkontaktabschnitte, und
- ein oder mehrere Funktionsabschnitte,
- wobei die ein oder mehreren Werkstückkontaktabschnitte dazu vorgesehen sind während des Bearbeitens der Werkstück-Verzahnung mittels des Werkzeugs (1) mit dem Werkstück, vorzugsweise der Werkstück-Verzahnung, in Kontakt, vorzugsweise spanabhebenden Eingriff, zu kommen,
- wobei die ein oder mehreren Funktionsabschnitte dazu vorgesehen sind während des Bearbeitens der Werkstück-Verzahnung mittels des Werkzeugs (1) von dem Werkstück, vorzugsweise der Werkstück-Verzahnung, beabstandet zu sein, und
- wobei die ein oder mehreren Werkstückkontaktabschnitte wenigstens abschnittsweise eine Verschleißschutzbeschichtung (17) aufweisen,
**dadurch gekennzeichnet, dass**
die ein oder mehreren Funktionsabschnitte wenigstens abschnittsweise eine Sperrbeschichtung (18) zum Schutz des Werkzeugs (1) beim Entschichten aufweisen und dass, vorzugsweise, die Sperrbeschichtung (18) Titan umfasst.

2. Beschichtetes Werkzeug (1) nach Anspruch 1,
**dadurch gekennzeichnet, dass**
- die Verschleißschutzbeschichtung (17) Aluminium, Stickstoff und/oder Chrom umfasst, und/oder
- dass die Verschleißschutzbeschichtung (17) eine Schichtdicke von wenigstens 0,5 µm, vorzugsweise wenigstens 1 µm, insbesondere wenigstens 1,5 µm und/oder höchstens 5 µm, vorzugsweise höchstens 4 µm, insbesondere höchstens 3 µm, aufweist.

3. Beschichtetes Werkzeug (1) nach einem Anspruch 1 oder Anspruch 2,
**dadurch gekennzeichnet, dass**
- die Sperrbeschichtung (18) Stickstoff, vorzugweise Titannitrid, Aluminium, vorzugsweise Aluminium-Titan-Nitrid, und/oder Silizium, vorzugsweise Titandisilicid, umfasst, und/oder
- dass die Sperrbeschichtung (18) eine Schichtdicke von wenigstens 0,1 µm, vorzugsweise wenigstens 0,5 µm, insbesondere wenigstens 1 µm und/oder höchstens 5 µm, vorzugsweise höchstens 3,5 µm, insbesondere höchstens 2,5 µm, aufweist.

4. Beschichtetes Werkzeug (1) nach einem der Ansprüche 1 bis 3,
**dadurch gekennzeichnet, dass**
- die ein oder mehreren Werkstückkontaktabschnitte wenigstens abschnittsweise die Sperrbeschichtung (18) aufweisen,
- dass die ein oder mehreren Funktionsabschnitte wenigstens abschnittsweise die Verschleißschutzbeschichtung (17) aufweisen,
- dass in den ein oder mehreren Werkstückkontaktabschnitten die Verschleißschutzbeschichtung (17) wenigstens abschnittsweise auf dem Grundkörper (2) und/oder auf der Sperrbeschichtung (18) angeordnet ist,
- dass in den ein oder mehreren Werkstückkontaktabschnitten die Sperrbeschichtung (18) auf dem Grundkörper (2) angeordnet ist,
- dass in den ein oder mehreren Funktionsabschnitten die Sperrbeschichtung (18) auf dem Grundkörper (2) angeordnet ist und/oder
- dass die Sperrbeschichtung (18) wenigstens abschnittsweise eine niedrigere Schichtdicke in wenigstens einem Werkstückkontaktabschnitt der ein oder mehreren Werkstückkontaktabschnitt aufweist, in welchem Werkstückkontaktabschnitt die Verschleißschutzbeschichtung (17) vorzugsweise wenigstens abschnittsweise auf der Sperrbeschichtung (18) angeordnet ist, als die Sperrbeschichtung (18) wenigstens abschnittsweise in wenigstens einem Funktionsabschnitt der ein oder mehreren Funktionsabschnitte.

5. Beschichtetes Werkzeug (1) nach einem der Ansprüche 1 bis 4,
**dadurch gekennzeichnet, dass**
das Werkzeug (1), vorzugweise der Grundkörper (2), wenigstens eine Werkzeug-Verzahnung (3) aufweist und dass, vorzugsweise, die Werkzeug-Verzahnung (3)
- ein oder mehrere Stirnflächen (5), aufweist,
- ein oder mehrere Zähne (6) aufweist, wobei die ein oder mehreren Zähne (6) jeweils wenigstens eine Zahnflanke (7), vorzugsweise wenigstens zwei Zahnflanken (7), wenigstens eine Zahnkopffläche (8) und/oder wenigstens eine Zahnfußfläche (9) aufweisen, und/oder
- ein oder mehrere Schneidekanten (10) und/oder ein oder mehrere Schneideflächen, vorzugsweise jeweils wenigstens abschnittsweise angeordnet an wenigstens einer Stirnfläche (5) der ein oder mehreren Stirnflächen (5) der Werkzeug-Verzahnung (3), aufweist.

6. Beschichtetes (1) Werkzeug nach Anspruch 5,
**dadurch gekennzeichnet, dass**
- die ein oder mehreren Stirnflächen (5) der Werkzeug-Verzahnung (3) wenigstens abschnittsweise einen Werkstückkontaktabschnitt der ein oder mehreren Werkstückkontaktabschnitte umfassen, vorzugsweise bilden, und, vorzugsweise, wenigstens abschnittweise die Verschleißschutzbeschichtung (17) aufweist,
- dass die Zahnflanke (7), vorzugsweise die zwei Zahnflanken (7), die Zahnkopffläche (8) und/oder die Zahnfußfläche (9) der ein oder mehreren Zähne (6) der Werkzeug-Verzahnung (3) jeweils wenigstens abschnittsweise einen Werkstückkontaktabschnitt der ein oder mehreren Werkstückkontaktabschnitte umfasst, vorzugsweise bildet, und, vorzugsweise, wenigstens abschnittweise die Verschleißschutzbeschichtung (17) aufweist, und/oder
- dass die ein oder mehreren Schneidekanten (10) und/oder die ein oder mehreren Schneideflächen der Werkzeug-Verzahnung (3) jeweils wenigstens abschnittsweise einen Werkstückkontaktabschnitt der ein oder mehreren Werkstückkontaktabschnitte umfassen, vorzugsweise bilden, und, vorzugsweise, wenigstens abschnittweise die Verschleißschutzbeschichtung (17) aufweisen.

7. Beschichtetes Werkzeug (1) nach einem der Ansprüche 1 bis 6,
**dadurch gekennzeichnet, dass**
das Werkzeug (1), vorzugsweise der Grundkörper (2), ein Grundelement (4) aufweist und dass, vorzugweise,
- die Werkzeug-Verzahnung (4) an dem Grundelement (3) angeordnet ist, und/oder
- das Grundelement (4) ein oder mehrere äußere Flächen (11) aufweist.

8. Beschichtetes Werkzeug (1) nach einem der Ansprüche 1 bis 7,
**dadurch gekennzeichnet, dass**
das Werkzeug (1), vorzugsweise der Grundkörper (2), insbesondere die Werkzeug-Verzahnung (3) und/oder das Grundelement (4), eine Öffnung (13), vorzugsweise ausgestaltet als Durchgangsöffnung, aufweist und dass, vorzugsweise,
- die Öffnung (13) ein oder mehrere innere Flächen (14) aufweist und/oder
- die Öffnung (13) ein oder mehrere Öffnungs-Planflächen (15) aufweist.

9. Beschichtetes Werkzeug (1) nach einem der Ansprüche 1 bis 8,
**dadurch gekennzeichnet, dass**
- das Werkzeug (1), vorzugsweise der Grundkörper (2), insbesondere das Grundelement (4), ein oder mehrere Werkzeug-Stirnflächen (16) und/oder ein oder mehrere Werkzeug-Planflächen (20) aufweist und
- dass, vorzugsweise, die ein oder mehreren Werkzeug-Stirnflächen (16) und/oder die ein oder mehreren Werkzeug-Planflächen (20) von der Werkzeug-Verzahnung (3), vorzugsweise wenigstens einer der Stirnflächen (5) der ein oder mehreren Stirnflächen (5) der Werkzeug-Verzahnung (3), beabstandet ist.

10. Beschichtetes Werkzeug (1) nach einem der Ansprüche 1 bis 9,
**dadurch gekennzeichnet, dass**
das Werkzeug (1), vorzugsweise der Grundkörper (2), insbesondere das Grundelement (4), einen Befestigungsabschnitt (12) zum Befestigen des Werkzeugs (1) an einer Werkzeugaufnahme einer Werkzeugmaschine aufweist.

11. Beschichtetes Werkzeug (1) nach einem der Ansprüche 7 bis 10,
**dadurch gekennzeichnet, dass**
- das Grundelement (4), vorzugsweise die ein oder mehreren äußeren Flächen (11), wenigstens abschnittsweise einen Funktionsabschnitt der ein oder mehrere Funktionsabschnitte umfassen, vorzugsweise bilden, und, vorzugsweise, wenigstens abschnittweise die Sperrbeschichtung (18) aufweisen,
- dass die Öffnung (13), vorzugsweise die ein oder mehreren Öffnungs-Planflächen (15) und/oder die ein oder mehreren inneren Flächen (14), wenigstens abschnittsweise einen Funktionsabschnitt der ein oder mehrere Funktionsabschnitte umfassen, vorzugsweise bilden, und, vorzugsweise, wenigstens abschnittweise die Sperrbeschichtung (18) aufweisen,
- dass die ein oder mehreren Werkzeug-Stirnflächen (16) und/oder die ein oder mehreren Werkzeug-Planflächen (20) wenigstens abschnittsweise einen Funktionsabschnitt der ein oder mehrere Funktionsabschnitte umfasst, vorzugsweise bilden, und, vorzugsweise, wenigstens abschnittweise die Sperrbeschichtung (18) aufweisen, und/oder
- dass der Befestigungsabschnitt (12) wenigstens abschnittsweise einen Funktionsabschnitt der ein oder mehrere Funktionsabschnitte umfasst, vorzugsweise bildet, und, vorzugsweise, wenigstens abschnittweise die Sperrbeschichtung (18) aufweist.

12. Verfahren zum Herstellen eines beschichteten Werkzeugs (1), vorzugsweise eines beschichten Werkzeugs (1) nach einem der Ansprüche 1 bis 11, umfassend die folgenden Schritte:
a) Bereitstellen eines Werkzeugrohlings für ein beschichtetes Werkzeug (1) zum Bearbeiten wenigstens einer Werkstück-Verzahnung eines Werkstücks,
- wobei der Werkzeugrohling einen Grundkörper (2) umfasst,
b) Auftragen einer Sperrbeschichtung (18) zum Schutz des Werkzeugs (1) beim Entschichten wenigstens abschnittsweise in ein oder mehreren Funktionsabschnitten des Werkzeugrohlings,
- wobei die ein oder mehreren Funktionsabschnitte dazu vorgesehen sind während des Bearbeitens der Werkstück-Verzahnung mittels des Werkzeugs (1) von dem Werkstück, vorzugsweise der Werkstück-Verzahnung, beabstandet zu sein,
- wobei, vorzugsweise, die Sperrbeschichtung Titan umfasst, und
c) Auftragen einer Verschleißschutzbeschichtung (17) wenigstens abschnittsweise in ein oder mehreren Werkstückkontaktabschnitten des Werkzeugrohlings,
- wobei die ein oder mehreren Werkstückkontaktabschnitte dazu vorgesehen sind während des Bearbeitens der Werkstück-Verzahnung mittels des Werkzeugs (1) mit dem Werkstück, vorzugsweise der Werkstück-Verzahnung, in Kontakt, vorzugsweise spanabhebenden Eingriff, zu kommen.

13. Verfahren zum Herstellen eines beschichteten Werkzeugs (1) nach Anspruch 12, **dadurch gekennzeichnet, dass**
- die Verschleißschutzbeschichtung (17) Aluminium, Stickstoff und/oder Chrom umfasst,
- dass die Verschleißschutzbeschichtung (17) im aufgetragenen Zustand, vorzugsweise nach dem Schritt c), eine Schichtdicke von wenigstens 0,5 µm, vorzugsweise wenigstens 1 µm, insbesondere wenigstens 1,5 µm und/oder höchstens 5 µm, vorzugsweise höchstens 4 µm, insbesondere höchstens 3 µm, aufweist,
- dass die Sperrbeschichtung (18) Stickstoff, vorzugweise Titannitrid, Aluminium, vorzugsweise Aluminium-Titan-Nitrid, und/oder Silizium, vorzugsweise Titandisilicid, umfasst, und/oder
- dass die Sperrbeschichtung (18) im aufgetragenen Zustand, vorzugsweise nach dem Schritt b), eine Schichtdicke von wenigstens 0,1 µm, vorzugsweise wenigstens 0,5 µm, insbesondere wenigstens 1 µm und/oder höchstens 5 µm, vorzugsweise höchstens 3,5 µm, insbesondere höchstens 2,5 µm, aufweist.

14. Verfahren zum Herstellen eines beschichteten Werkzeugs (1) nach Anspruch 12 oder Anspruch 13,
**dadurch gekennzeichnet, dass**
- in Schritt b) in den ein oder mehreren Funktionsabschnitten die Sperrbeschichtung (18) wenigstens abschnittsweise auf dem Grundkörper (2) aufgetragen wird, und/oder
- dass in Schritt c) in den ein oder mehreren Werkstückkontaktabschnitten die Verschleißschutzbeschichtung (17) wenigstens abschnittsweise auf dem Grundkörper (2) aufgetragen wird.

15. Verfahren zum Herstellen eines beschichteten Werkzeugs (1) nach einem der Ansprüche 12 bis 14,
**dadurch gekennzeichnet, dass**
in Schritt b) die Sperrbeschichtung (18) wenigstens abschnittsweise in den ein oder mehreren Werkstückkontaktabschnitten und/oder ein oder mehreren für die ein oder mehreren Werkstückkontaktabschnitte vorgesehenen Abschnitten aufgetragen wird und dass, vorzugsweise,
- in Schritt b) in den ein oder mehreren Werkstückkontaktabschnitten und/oder den ein oder mehreren für die ein oder mehreren Werkstückkontaktabschnitte vorgesehenen Abschnitten die Sperrbeschichtung (18) wenigstens abschnittsweise auf dem Grundkörper (2) aufgetragen wird,
- in Schritt c) in den ein oder mehreren Werkstückkontaktabschnitten die Verschleißschutzbeschichtung (17) wenigstens abschnittsweise auf der Sperrbeschichtung (18) aufgetragen wird, und/oder
- die in Schritt b) auf den ein oder mehreren Werkstückkontaktabschnitten und/oder den ein oder mehreren für die ein oder mehreren Werkstückkontaktabschnitte vorgesehenen Abschnitten aufgetragene Sperrbeschichtung (18) wenigstens abschnittsweise entfernt wird, vorzugsweise bevor in Schritt c) die Verschleißschutzbeschichtung (17) **in** den ein oder mehreren Werkstückkontaktabschnitten, insbesondere auf dem Grundkörper (2) und/oder wenigstens abschnittsweise in den ein oder mehreren Entfernungsbereichen in den die Sperrbeschichtung (18) entfernt wurde, wenigstens abschnittsweise aufgetragen wird.
